# EUROPEAN PATENT SPECIFICATION

(11) **EP 0 932 980 B1**
(45) Date of publication and mention of the grant of the patent: **18.02.2004**
(21) Application number: 98938998.6
(22) Date of filing: 12.08.1998
(51) Int. Cl.: H04N 7/30

(54) **VIDEO TRANSMISSION APPARATUS EMPLOYING INTRA-FRAME-ONLY VIDEO COMPRESSION THAT IS MPEG-2 COMPATIBLE**
VORRICHTUNG ZUR VIDEOÜBERTRAGUNG MIT MPEG-2-KOMPATIBLER NUR-INTRA-FRAME-VIDEOKOMPRESSION
DISPOSITIF DE VIDEOTRANSMISSION UTILISANT LA COMPRESSION VIDEO INTRATRAME UNIQUEMENT ET COMPATIBLE MPEG-2

(30) Priority: 14.08.1997 US 56325 P
(43) Date of publication of application: 04.08.1999
(73) Proprietor: Samsung Electronics Co., Ltd., Suwon City, Kyungki-do 442-370 (KR)
(72) Inventor: SONG, Dong, Il, Suwon-city Kyungki-do 442-373 (KR); JEON, Jong, Gu, Suwon-city Kyungki-do 442-372 (KR); KIM, Yong, Je, Suwon-city Kyungki-do 440-300 (KR)
(74) Representative: Mertens, Hans Victor
(86) International application number: PCT/KR1998/000249
(87) International publication number: WO 1999/009747

(56) References cited:
- EP-A2- 0 705 041
- US-A- 5 329 365

## Description

The invention relates to video compression techniques and, more particularly, to video compression techniques that are adapted for use with digital camcorders or with other digital tape recording and playback apparatus when video editing capabilities are desired. Such compression techniques are known from e.g. EP-A-0 705 041.

### BACKGROUND OF THE INVENTION

Digital video cassette (DVC) electromagnetic tape recording is currently done using standards developed in a High-Definition Digital Video-Cassette-Recorder Conference. Five standards were established in that conference, including a standard for standard density (SD) recording in which one frame of NTSC video is-recorded in 1350 syncblocks. These 1350 syncblocks, 90 syncblocks of accompanying audio and 44 syncblocks of overhead are distributed amongst ten successive helically recorded tracks on the electromagnetic recording tape. Syncblocks are uniform in bit length, and five syncblocks comprise a segment of five macroblocks of DCT. Each block of DCT is based on an 8-pixel-by-8-pixel block of 4:2:0 image data. That is, luminance (Y) is sampled twice as densely in the horizontal direction and in the vertical direction as the red-minus-luminance color difference signal (Cr) and as the blue-minus-luminance color difference signal (Cb). Each macroblock contains four blocks of discrete cosine transform (DCT) descriptive ofY and two blocks descriptive of Cr and Cb, which blocks are ofvariable bit length. While there are 385 bytes per segment in the SD standard, often as few as a hundred or less are required for transmitting DCT capable of generating images of requisite resolution. One of the objectives of the inventors was to more efficiently utilize the bytes available in each successive group of ten tracks, so that the number of null bytes is reduced and so that image resolution is improved by using those previously unused bytes.

The HD Digital VCR Conference established a high-density (HD) baseband standard in which each frame of a high-resolution television picture, together with accompanying audio and overhead, occupies twenty consecutive recording tracks. The conference defined further standards for recording direct video broadcasting (DVB), advanced television (ATV), PAL+ for Europe and EDTV-II for Japan. For the most part, the recording scheme for DVB simply involves the payload being formed from segments of the transport stream for this transmission medium. A similar observation can be made concerning the recording scheme for DVB. However, there are rules for the insertion of data to support trickplay reproduction from the recording, in addition to normal reproduction.

The high-resolution TV picture contemplated for HD baseband recording is of MUSE type with 1125 scan lines and 1200 luminance pixels per scan line. Those skilled in the art recognize that the HD baseband standard does not conform to any of the formats supported by the high-definition broadcast television standard established by the Advanced Television Standards Committee. The ATSC standard supports 480 scan lines with 640 luminance pixels per interlaced scan line, 480 scan lines with 720 luminance pixels per interlaced or progressive scan line, 720 scan lines with 1280 luminance pixels per progressive scan line, and 1080 scan lines with 1920 luminance pixels per interlaced scan line. A known practice is to record two data segments of ATSC digital television signal, each preceded by a time stamp, in five syncblocks of DTV signal.

The audio signals used as source signals in TV broadcasting are sampled at a frequency of 48 kHz, locked to the 27 MHz system clock, and are encoded according to the digital audio compression (AC-3) standard specified in the body of ATSC document A/52. The resulting compressed audio information is parsed into packets identified in the packet headers as being audio packets.

The video signals used as source signals in TV broadcasting are encoded according to the MPEG-2 video compression standard. The resulting compressed video information is parsed into packets identified in the packet headers as being video packets. Transmission is by groups of pictures, each group of pictures (GOP) containing coding for an initial anchor frame referred to as an "**I** frame" subjected solely to intraframe video compression, followed by coding for a succession of other frames subjected to interframe compression coding. These other frames comprise so-called "**P** frames" and so-called "**B** frames" Coding for each **P** frame is based on differences of that video frame in actuality from that frame as predicted by extrapolation from a most recent previous one of the **I** and **P** frames, in accordance with motion vectors derived by block comparison between the more recent of these previous **I** and **P** frames. Coding for each **B** frame is based on differences of that video frame in actuality from that frame as predicted by bidirectional interpolation from a preceding one and a succeeding one of the **I** and **P** frames.

MPEG-2 compressed video is suited to an application, such as television broadcasting, where there is not much concern with regard to the difficulty of editing video information in this transport stream format. In applications where ease of editing video is of concern, preferably video compression is done relying not at all on interframe compression techniques, but just on intrafame video compression techniques. Ease of editing video is desirable for editing of video recordings to delete undesired frames, to introduce frame repetition for achieving slow-motion or stop-motion effects, and to insert reverse motion sequences. By way of further examples, ease of editing video is also desirable for extracting still pictures from camcorder recordings, for extracting selected video for transmission over the internet and for editing commercials out of video recorded from broadcast television.

In systems for processing video in which ease of editing video is of concern, the inventors advocate intraframe video compression encoding every successive video frame in accordance with the way intraframe video compression encoding is done on **I** anchor frames in MPEG-2 and then identifying each frame as being intraframe video compression encoded similarly to the way it is done for anchor frames in MPEG-2. A conventional MPEG-2 encoder can be modified to carry out this video compression algorithm. Alternatively, the encoder for encoding just anchor or **I** frames can be considerably simplified from the encoder required for coding **P** frames and **B** frames as well as **I** frames, since there is no need for the motion estimation circuitry that forms a substantial part of a complete MPEG-2 encoder. The motion estimation circuitry requires memory with storage capability for plural frames of video information. The inventors prefer such a simplified encoder be used in a digital camcorder for reducing power drain on the camcorder battery and for shaving the weight and size of the camcorder.

In many systems for processing video in which ease of editing video is of concern, an MPEG-2 decoder is already available for use in decoding continuous intraframe video compression encoding descriptive of consecutive video frames, so there is no additional cost for a decoder to decode the transport stream of **I** frames without intervening **P** or **B** frames. If an MPEG-2 decoder is not already available in a system, providing such a decoder is reasonable in cost, since the amount of hardware in an MPEG-2 decoder is considerably less than that in an MPEG-2 encoder. Alternatively, a modified MPEG-2 decoder only for **I** frames can be used.

### SUMMARY OF THE INVENTION

The invention in one of its aspects is embodied in a digital video recorder with a video compression encoder for generating consecutive **I** frames according to the MPEG-2 standard, but in a departure from the MPEG-2 standard without intervening **P** or **B** frames. The invention in a more particular one of its aspects is embodied in a digital camcorder with a video compression encoder for generating consecutive **I** frames according to the MPEG-2 standard, but in a departure from the MPEG-2 standard without intervening **P** or **B** frames. The invention in a still more particular one of its aspects is embodied in a digital video recorder or digital camcorder with a video compression encoder for generating a continuous succession of **I** frames according to the MPEG-2 standard, which video compression encoder is simplified so as not to have capability for encoding **P** frames or **B** frames.

The invention in another one of its aspects is embodied in a digital video recorder or digital camcorder with a video compression encoder for generating a continuous succession of **I** frames that can be recorded either as an elementary video stream without the use of 2:5 conversion or as a transport stream using 2:5 conversion, which transport stream is formed in accordance with a modification of the MPEG-2 standard which includes **I** frames but not intervening **P** or **B** frames

### BRIEF DESCRIPTION OF THE DRAWING

FIGURES 1, 2, 3 and 4 are each a schematic diagram of a respective camcorder embodying the invention in certain of its aspects.
FIGURES 5, 6, 7, 8, 9 and 10 are each a schematic diagram of a respective digital tape recorder and player embodying the invention in certain of its aspects, connected in a system embodying the invention in further of its aspects.
FIGURE 11 is a detailed schematic diagram of compressed video signal generation circuitry that can be used in the apparatus of FIGURE 1 or 3, 5, 7 or 9.
FIGURE 12 is a detailed schematic diagram of compressed video signal generation circuitry that can be used in the apparatus of FIGURE 2, 4, 6, 8 or 10.
FIGURE 13 is a diagram indicating how in a modification of the digital tape recorder and player of FIGURE 5, 6, 7, 8, 9 or 10 an MPEG-2 decoder is used in replacing the video compression apparatus for generating consecutive **I** frames only.
FIGURE 14 is a schematic diagram of snapshot apparatus as can be used with the camcorder of FIGURE 1 or 2, or with the digital tape recorder and player of FIGURE 5 or 6.
FIGURE 15 is a schematic diagram of snapshot apparatus as can be used with the camcorder of FIGURE 3 or 4, or with the digital tape recorder and player of FIGURE 7, 8, 9 or 10.
FIGURE 16 is a schematic diagram of a system including a computer with video and audio editing software, which system is operated for editing video in accordance with the invention.

### DETAILED DESCRIPTION OF THE PREFERRED EMBODIMENTS

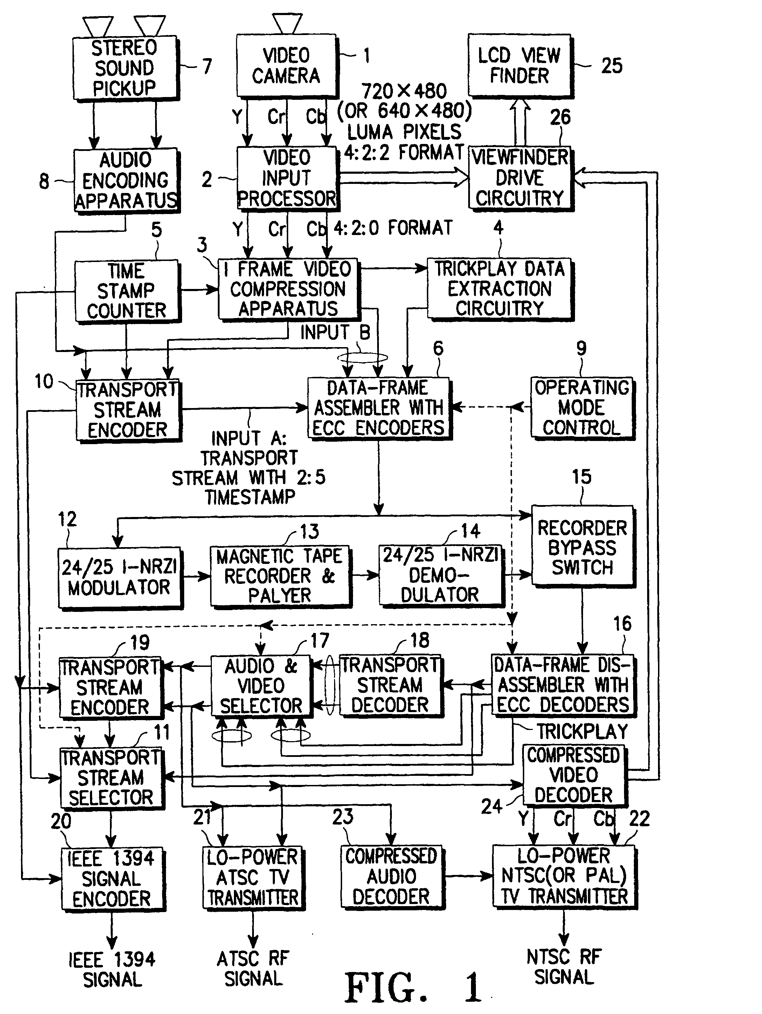

FIGURE 1 shows a camcorder in which video compression is done in accordance with the invention. A video camera **1** generates frames of video information in 4:3 aspect ratio including luminance (**Y**) information having 480 active scan lines in each frame and 720 (or, alternatively, 640) pixels in each scan line. In a camcorder for home use the video camera **1** generally employs a single solid-state imager with a color pattern filter; in a camcorder for broadcast use the video camera **1** generally employs beam splitter optics with respective solid-state imager for each of three additive primary colors. Either type of video camera **1** is presumed to include color matrixing circuitry such that the video camera **1** supplies luminance (**Y**) information, red-minus-luminance (**Cr**) chrominance information, and blue-minus-luminance (**Cb**) chrominance information as the components of video information in 4:2:2 format.

A video input processor **2** converts the **Y**, **Cr**, and **Cb** signals to 4:2:0 sampling format by performing a 2:1 decimation of each of the **Cr** and **Cb** signals in both the vertical and the horizontal directions after separable lowpass anti-aliasing filtering in both directions. The video information from the video camera **1** has two line interlaced fields in each frame of one-thirtieth second duration, or instead is progressively scanned with frames each of one-sixtieth second duration. Designs for respective lowpass anti-aliasing filtering appropriate for each alternative are known to persons skilled in the art.

If there are two line interlaced fields in each frame, a 7-tap vertical lowpass anti-aliasing filter is used in odd fields; and a 4-tap vertical lowpass anti-aliasing filter is used in even fields. Then the earlier and later fields of each frame are interlaced line by line into a complete frame for compression encoding. This procedure generates a succession of frames each of one-thirtieth second duration.

If the video camera **1** supplies progressive scan video information with frames each of one-sixtieth second duration, after the video input processor **2** converts the **Y**, **Cr**, and **Cb** signals to 4:2:0 sampling format, the number of frames can be decimated 2:1 by using a pseudo field interlace method to generate pseudo-field-interlace frames occurring at halved frame rate. Suppose the frames of video information are numbered modulo-2 that in order of their occurrence, and the lines in each frame are consecutively numbered in order of their occurrence. The amplitudes of **Y**, **Cr**, and **Cb** pixels in odd scan lines of each odd frame are combined with their counterparts in the immediately preceding even frame to generate odd-line fields of the pseudo-field-interlace frames occurring at halved frame rate. The amplitudes of **Y**, **Cr**, and **Cb** pixels in even scan lines of each odd frame are combined with their counterparts in the immediately succeeding even frame to generate even-line fields of the pseudo-field-interlace frames occurring at halved frame rate.

Video compression apparatus **3** receives the **Y**, **Cr**, and **Cb** signals in 4:2:0 sampling format for video compression encoding. Video compression apparatus **3** also receives the output count of a time stamp counter **5**, which counts system clock cycles in each group of sixteen video frames. This output count accompanies compressed video signal components in order to keep track of the order in which they were generated. Video compression encoding is carried out on an intraframe basis on every one of the frames. This is done in accordance with the same intraframe compression encoding protocol used on only the first, anchor frame of each group of pictures in MPEG-2 video compression encoding. This intraframe compression encoding protocol proceeds by considering each frame of the **Y**, **Cr**, and **Cb** signal samples to be composed of a close-packed array of 8-pixel-by-8-pixel blocks arranged in rows and in columns. The discrete cosine transform (DCT) of each of these 8-pixel-by-8-pixel blocks is calculated in a prescribed order. The DCT coefficients of each 8-pixel-by-8-pixel block of video signal samples are quantized and supplied in a prescribed order as bit-serial binary numbers to form a string of bits descriptive of a respective DCT block. The succession of DCT blocks are then entropy encoded, which includes run-length coding followed by variable-length encoding based upon a table of presumed statistics. The MPEG-2 standard for video compression includes recommended tables for entropy encoding. Quantization of the DCT results is adjusted in order that the intraframe coding result for each frame fits within a 103,950 byte limit (77 bytes of data per sync block times 1350 sync blocks of video information per NTSC frame).

The video compression apparatus **3** supplies compressed video information for each consecutive frame generated according to the MPEG-2 intrafame-coding algorithms for **I** frames. The sequence headers, GOP headers, picture headers, slice headers and macroblock headers are inserted into this compressed video information by the video compression apparatus **3**. The picture header includes an 1-frame coding flag, which will condition any MPEG-2 decoder used during playback from the videocassette recording to decode the compressed video information on an intraframe basis. This is so whether the compressed video information is recorded directly or is recorded after being encoded into an MPEG-2 transport stream.

The FIGURE 1 camcorder is designed to be compatible with a digital videocassette recorder and player in regard to trickplay. Trickplay extraction circuitry **4** extracts trickplay information comprising the zero-frequency and other low-frequency DCT coefficients of the succession of DCT blocks of every anchor frame as computed in the video compression apparatus **3**. When in accordance with the invention every frame is encoded as an anchor **I** frame, the trickplay information changes more frequently than in conventional MPEG-2 encoding, but this is acceptable. In a variant of the just described procedure, every frame is encoded as an **I** frame, but only every sixteenth frame is treated as an anchor frame. In these alternate embodiments of the invention, every sixteenth frame is stored for a sixteen-frame period and used to support generation of trickplay information, more like what is done in conventional MPEG-2 encoding. However, embodiments of the invention not using this variant are currently preferred, since avoiding frame storage for every sixteenth frame reduces the cost and complexity of the video compression apparatus **3** appreciably. The trickplay extraction circuitry **4** parses the truncated DCT blocks so extracted into syncblocks supplied to a data-frame assembler **6** for insertion amongst other syncblocks containing time stamps and further containing video or audio packets. The insertion is done in accordance with a conventional prescribed pattern that forms bands of trickplay information in alternate recording tracks on the magnetic tape. The data-frame assembler **6** is otherwise the same as those used in a standard-definition digital-video-cassette recorder (SD DVCR).

Stereo sound pickup apparatus **7** is presumed to be associated with the video camera **1** in the FIGURE 1 camcorder and to supply a left-channel (L) signal and a right-channel (**R**) signal. The **L** and **R** signals are supplied to audio encoding apparatus **8** for compression encoding that generates compressed audio information. Compression encoding can be done in any of a number of ways such as according to MPEG standard, according to the AC-3 standard when recording digital television as broadcast in the United States, or according to a pulse code modulation (PCM) scheme.

Responsive to a control setting by a user of the FIGURE 1 camcorder, an operating mode control **9** conditions the camcorder to operate in accordance with a first data-frame-assembly mode. In this mode the compressed video information from the video compression apparatus **3** and the compressed audio information from the audio encoding apparatus **8** are utilized directly by a data-frame assembler **6**. The assembler **6** includes forward error-correction-code encoders for video and for audio. The compressed video information is temporarily stored in row and column array within a video portion of memory in the assembler **6**. The compressed audio information is temporarily stored in row and column array within an audio portion of memory in the assembler **6**. Per custom in SD DVCRs, the forward ECC encoder for video is a two-dimensional Reed-Solomon encoder using (149,138) outer coding circuitry and (85, 77) inner coding circuitry. The video portion of the memory in the assembler 6 is operated as an interleaver for this forward ECC encoder. Per custom in SD DVCRs, the forward ECC encoder for audio is a two-dimensional Reed-Solomon encoder using (14,9) outer coding circuitry and (85, 77) inner coding circuitry, with the audio portion of the memory in the assembler **6** being operated as an interleaver for this forward ECC encoder. The data-frame assembler **6** includes circuitry for prefacing each 85-byte row of forward error-correction-coded information with a 5-byte header when read as a syncblock from the memory in the assembler **6**. This 5-byte header comprises a 2-byte synchronization code followed by a 3-byte identification (ID) code.

The operating mode control **9** can alternatively have a user control setting that conditions the FIGURE **1** camcorder for operation in accordance with a second data-frame-assembly mode. In this second data-frame-assembly mode a transport stream supplied from a transport stream encoder **10** is utilized as input signal by the data-frame assembler **6**, rather than the compressed video information supplied directly from the video compression apparatus **3** and the compressed audio information from the audio encoding apparatus **8**. The transport stream encoder **10** parses the compressed video information into pairs of consecutive MPEG-2 video packets preceded by packet headers, each beginning with a time stamp. The transport stream encoder **10** parses the compressed audio information into consecutive audio packets preceded by packet headers each beginning with a time stamp. Each audio packet follows the packet header with auxiliary audio information containing codes indicative of the type of audio encoding that was used to generate the audio packets. This auxiliary audio information is forwarded to the transport stream encoder **10** from the audio encoding apparatus **8**. The transport stream encoder **10** assembles the video and audio packets into a first transport stream supplied to a transport stream selector **11**. The transport stream encoder **10** also assembles a second transport stream differing from the first transport stream in that extra time stamps as extracted from the time stamp counter **5** are inserted. This is done to implement 2:5 conversion, in which each consecutive pair of the 188-byte packets in this second transport stream are written into five rows of the memory in the data-frame assembler **6**, for subsequent reading as five sync blocks from the assembler **6**. A set of MPEG packs that specify the specific video and audio compression formats used in generating the transport stream are loaded from the transport stream encoder **10** into the data-frame assembler for insertion into the 19^{th}, 20^{th} and 156^{th} syncblocks of each data frame.

The further details of the data-frame assembler **6** will be familiar to one skilled in the art, conforming to "Specifications of Consumer-Use Digital VCRs using 6.3 mm magnetic tape" issuing from the December 1994 HD Digital VCR Conference. The sync blocks supplied from the data-frame assembler 6 are applied to a 24/25 modulator **12** as a modulating signal that governs the generation of interleaved-NRZI modulation. This I-NRZI modulation is supplied to the recording amplifier of a magnetic tape recorder (and player) 13 that is a component of the FIGURE 1 camcorder and is of helical recording type. The I-NRZI modulation results are without substantial direct component, so the amplified modulation results can be transformer coupled without loss of information to heads of the tape recorder **13** during times of recording. This transformer coupling is done by a rotary transformer between the head drum and the main body of the tape recorder **13**, which main body contains the mechanism for transporting magnetic tape recording medium past the head drum.

During times of playback from the magnetic tape recording medium, electric signals induced in the heads of the magnetic tape recorder and player **13** by magnetic changes in the moving medium are coupled through the rotary transformer to a playback amplifier in the recorder and player **13**. This playback amplifier supplies 24/25 I-NRZI modulation to a demodulator **14** for 24/25 I-NRZI modulation, which demodulator **14** reproduces the error-correction-coded syncblocks supplied from the data-frame assembler **6** for recording. A recorder bypass switch **15** is set in response to the desire of a user to select either the error-correction-coded syncblocks supplied from the data-frame assembler **6** or the error-correction-coded syncblocks reproduced by the 24/25 I-NRZI demodulator **14** to be supplied to a data-frame disassembler **16**.

The data-frame disassembler **16** corrects errors in the signal supplied thereto and accordingly includes decoders for the Reed-Solomon forward error-correction-codes. The data-frame disassembler **16** includes temporary-storage memory for video, which memory is operated as an interleaver for the video ECC decoder. The data-frame disassembler **16** also includes temporary-storage memory for audio, which memory is operated as an interleaver for the audio ECC decoder.

When the user control setting of the operating mode control **9** selects normal play in accordance with the first data-frame-assembly mode, an audio/video selector **17** selects as its output signal compressed video information and compressed audio information read from respective temporary-storage memory in the data-frame disassembler **16**. The compressed video information and compressed audio information are read to the audio/video selector **17** after error correction of the information by the ECC decoders in the data-frame disassembler **16** has been completed. In this mode the compression-encoded-video decoder **24** decodes compressed video information from the audio/video selector **17** on an I-frame-only basis. If the compression-encoded-video decoder **24** has the capability of decoding **B** or **P** frames as well as **I** frames, the decoder **24** is conditioned to decode on an I-frame-only basis responsive to the picture headers in the compressed video signal. If desired, the design can be such that the decoder **24** is conditioned to decode on an I-frame-only basis responsive to the user control setting of the operating mode control **9**.

When the user control setting of the operating mode control **9** selects normal-play in accordance with the second data-frame-assembly mode, the audio/video selector **17** selects as its output signal compressed video information and compressed audio information supplied by a transport stream decoder **18**. The compressed video information and compressed audio information are decoded from video packets and audio packets read to the decoder **18** from respective temporary-storage memory in the data-frame disassembler **16**. The video packets and audio packets are read to the transport stream decoder **18** after error correction of the packets by the ECC decoders in the data-frame disassembler 16 has been completed. If the compression-encoded-video decoder **24** has the capability of decoding **B** or **P** frames as well as I frames, the decoder **24** is conditioned to decode on an I-frame-only basis responsive to the picture headers in the compressed video signal indicating that this was the mode in which the DVCR tape cassette being played back was recorded.

When the user control setting of the operating mode control **9** selects trickplay, the output signal that the audio/video selector **17** supplies comprises null compressed audio information supplied as wired input and compressed video information recorded as trickplay signal, then read from temporary-storage memory in the data-frame disassembler **16** during playback. The audio recovered by the compression-encoded-audio decoder **23** is muted. If the compression-encoded-video decoder **24** has the capability of decoding **B** or **P** frames as well as **I** frames, the decoder **24** is conditioned to decode on an **I**-frame-only basis responsive to the user control setting of the operating mode control **9**.

The compressed video information and compressed audio information the audio/video selector **17** selects as its output signal is supplied to a transport stream encoder **19**. The transport stream encoder **19** supplies the transport stream selector **11** with a transport stream that is available when normal play in accordance with the first data-frame-assembly mode is the operating mode selected for the FIGURE 1 camcorder by the operating mode control **9**. The transport stream selector **11** responds to control setting by the user of the FIGURE 1 camcorder either to reproduce in its output signal the transport stream before recording, as supplied thereto by the transport stream encoder **10**, or another transport stream after playback from the tape recorder **13**. The transport stream selector **11** automatically selects the output signal from the transport stream encoder **19** as this other transport stream responsive to the operating mode control **9** selecting playback in accordance with the first data-frame-assembly mode. Responsive to the operating mode control **9** selecting playback in accordance with the second data-frame-assembly mode, the transport stream selector **11** automatically selects the output signal from the data-frame disassembler **16** to the transport stream decoder **18** as the other transport stream after playback that the selector **11** can reproduce as its ouput signal.

In a variation from what is shown in FIGURE 1 that does not alter ultimate camcorder performance very much, the other transport stream after playback from the tape recorder **13** can always be the output signal from the transport stream encoder **19**.

The transport stream reproduced in the output signal of the transport stream selector **11** is supplied to an IEEE 1394 signal encoder **20**. The IEEE 1394 signal encoder **20** prefaces each 188-byte packet in the transport stream with a 4-byte time stamp, apportions each 192-byte time-stamped packet among shorter data blocks
(e. g., each of 96-byte length), and precedes each data block with a header for accessing the transmission line and a CIP header. The CIP header contains information as to the apportionment of the 192-byte time-stamped packet and as to when data of similar characteristics is next to appear in the datastream.

FIGURE 1 shows the compressed video information and compressed audio information the audio/video selector 17 selects as its output signal being applied to a low-power ATSC television transmitter **21** adapted for transmitting a radio-frequency signal to a digital television receiver. This is an optional feature for a camcorder constructed in accordance with the invention. A representative low-power ATSC television transmitter **21** is described by T. P. Horowitz in U. S. patent No. 5,764,701 issued 9 June 1998 and entitled "VSB MODULATOR". The compressed video information and compressed audio information played back from a magnetic tape recording is apt to exhibit some time-base instability owing to irregularities in tape motion. Such time-base instability is preferably corrected by using a time-base stabilizer for reclocking the information from a stable clock source before the information is used in the transmitter **21** to modulate a radio-frequency carrier. This is desirable so that the equalizer employed in an ATSC television receiver receiving the modulated RF carrier will operate properly. Generally, it is simpler to side-step time-base instability problems by supplying the IEEE 1394 Standard signal directly to the packet sorter in the ATSC television receiver, rather than attempting to link the camcorder to the receiver via RF input.

FIGURE 1 shows another optional feature for a camcorder constructed in accordance with the invention, a low-power NTSC television transmitter **22** adapted for transmitting a radio-frequency signal to an analog television receiver. The compressed audio information selected by the audio/video selector **17** is supplied to a compression-encoded-audio decoder **23**. The compressed video information selected by the audio/video selector **17** is supplied to a compression-encoded-video decoder **24**. The decoder **24** can be a conventional MPEG-2 video decoder, but is considerably simplified by being modified for decoding only **I** frames. The decoders **23** and **24** supply de-compressed audio information and de-compressed video information, respectively, to the transmitter **16**.

The FIGURE 1 camcorder has a liquid-crystal-display (LCD) viewfinder **25**. During recording or previewing, viewfinder drive circuitry **26** supplies drive signals to the LCD viewfinder **25** in response to **Y**, **Cr,** and **Cb** signals in 4:2:0 sampling format supplied by the video input processor **2**. During playback, viewfinder drive circuitry **26** supplies drive signals to the LCD view finder **25** in response to **Y**, **Cr**, and **Cb** signals in 4:2:0 sampling format supplied by the compression-encoded-video decoder **24**. The drive signals applied to the LCD view finder **25** are typically **R** (red), **G** (green) and **B** (blue) drive signals.

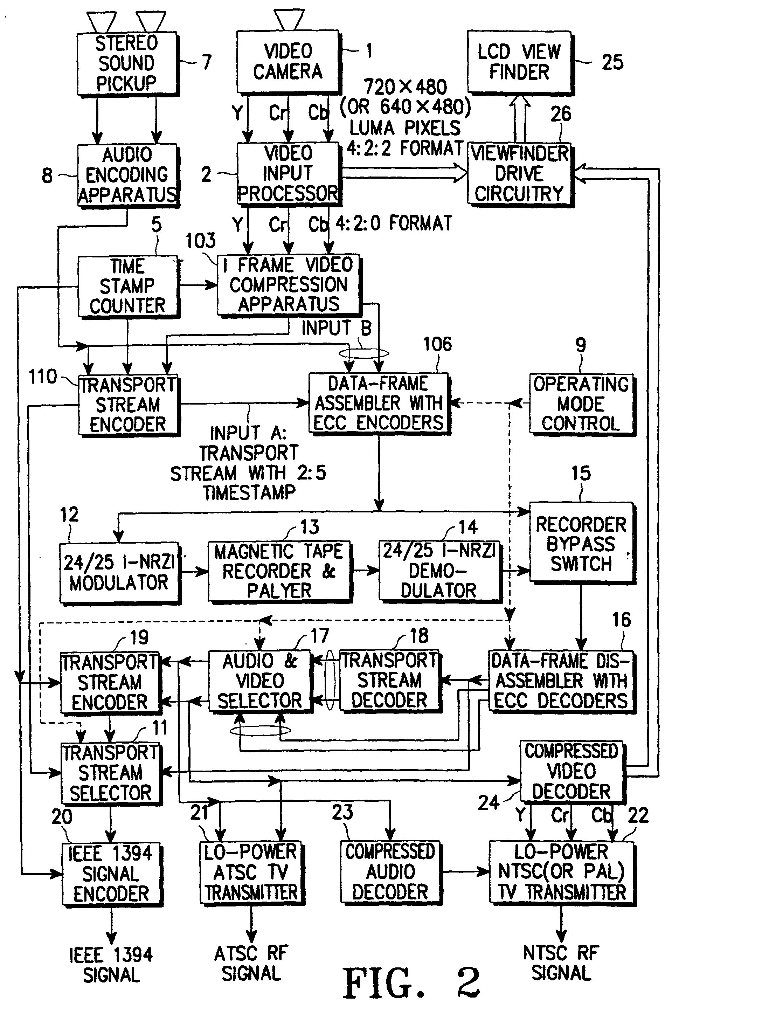

FIGURE 2 shows a camcorder that differs from the FIGURE 1 camcorder in the way that trickplay is implemented. In the FIGURE 2 camcorder the DCT blocks are recorded in the tracks on the electromagnetic tape so that the zero-frequency and other low-frequency DCT coefficients of the succession of DCT blocks of each frame occupy leading portions of syncblocks. During trickplay these zero-frequency and other low-frequency DCT coefficients are recovered for generating a low-resolution display, and the higher-frequency DCT coefficients are discarded. Eliminating the trickplay bands conventionally used in digital video cassette recording increases the average payload data rate from 19.3 million bits per second to 23 million bits per second.

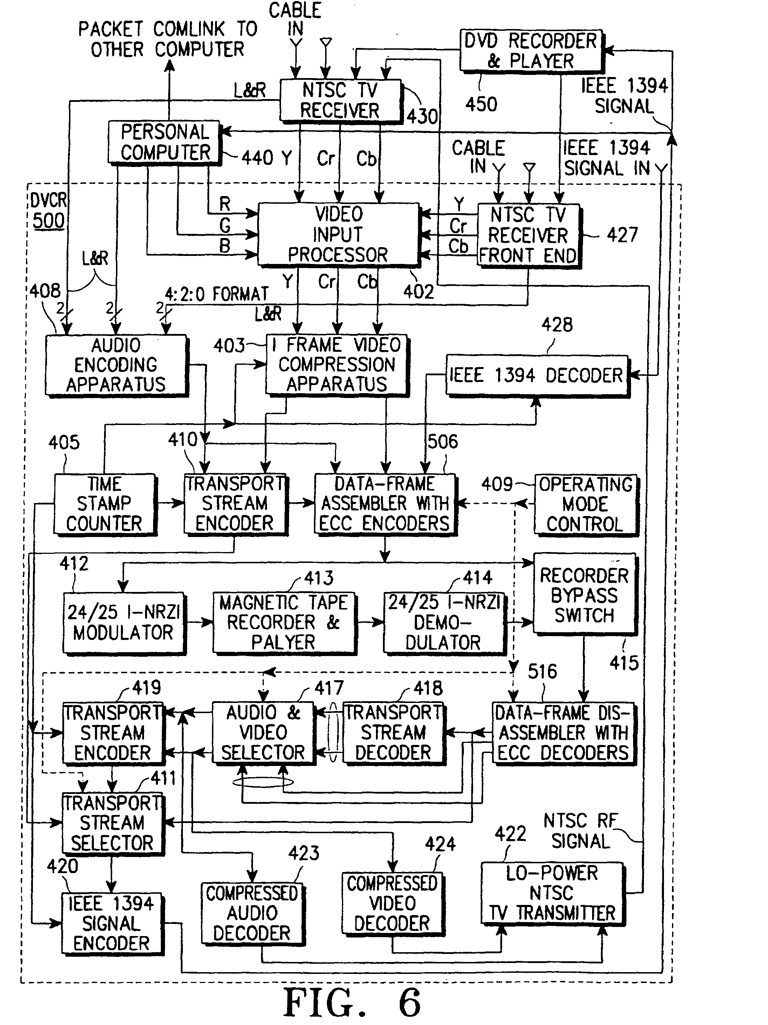

The trickplay extraction circuitry **4** is omitted in the FIGURE 2 camcorder, and the video compression apparatus **3** is replaced by video compression apparatus **103** which needs not include provisions to facilitate connection to the trickplay extraction circuitry **4**. That is, conventional trickplay information is not recorded in the FIGURE 2 camcorder. The transport stream decoder **10** is replaced by a transport stream decoder **110** modified to interface with the video compression apparatus **103**, which interface will be described in more detail further when referring to FIGURE 6 of the drawing. In the FIGURE 2 camcorder the data-frame assembler **6** is replaced by a data-frame assembler **106**, which omits syncblocks descriptive of trickplay bands from its assembly procedures and increases the number of syncblocks containing normal-play video packet information in each frame. The data-frame assembler **106** shuffles the order of the DCT coefficients of the succession of DCT blocks of each frame so the zero-frequency and other low-frequency DCT coefficients occupy leading portions of syncblocks. The data-frame disassembler **16** is replaced by a data-frame disassembler **116** that takes into account the recorded signal omitting syncblocks descriptive of trickplay bands and replacing the omitted syncblocks with syncblocks containing further video packet information.

The camcorders of FIGURES 1 and 2 employ CCIR 301 Standard video signals having sixty frames per second and 525 scan lines per frame in accordance with practice in the United States of America. Modifications of these camcorders are readily made so they can employ CCIR 301 Standard video signals having fifty frames per second and 625 scan lines per frame, in accordance with practice in other countries. Such modifications embody the invention in certain of its aspects.

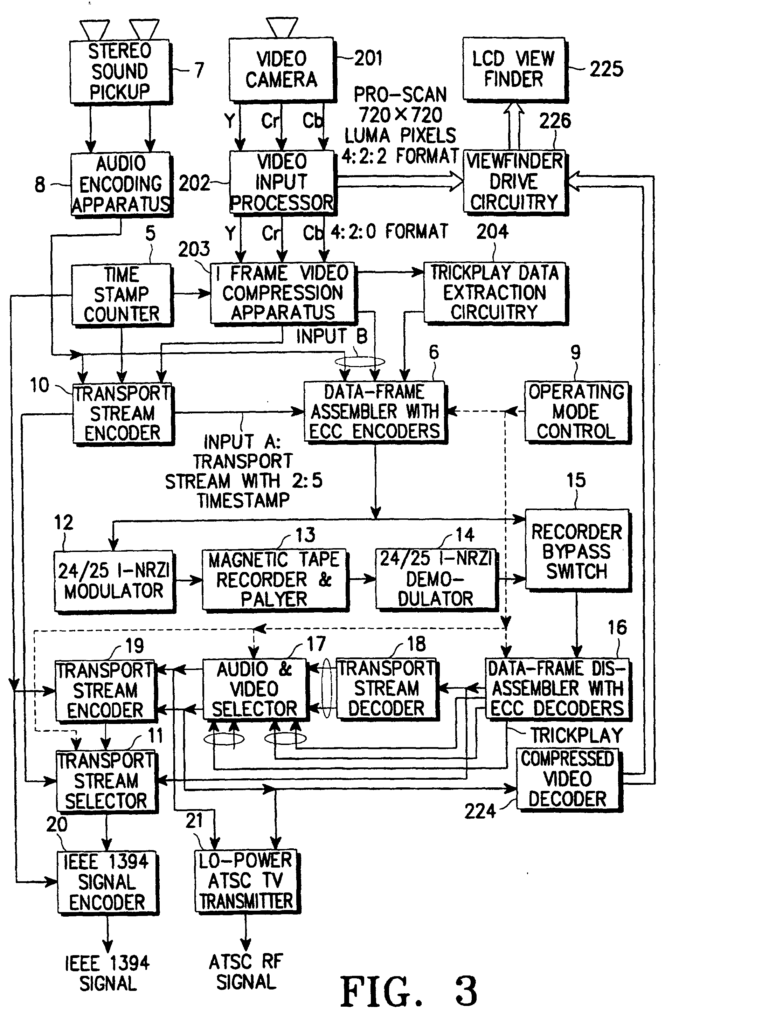

FIGURE 3 shows a modification of the FIGURE 1 camcorder that uses a video camera **201** for generating progressively scanned frames of video information in 16:9 aspect ratio including luminance (**Y**) information having 720 active scan lines in each frame and 1280 pixels in each scan line. In a camcorder for home use the video camera **201** is apt to employ a single solid-state imager with a color pattern filter; in a camcorder for broadcast use the video camera **201** is apt to employ beam splitter optics with respective solid-state imager for each of three additive primary colors. Either type of video camera **201** is presumed to include color matrixing circuitry such that the video camera **201** supplies luminance (**Y**) information, red-minus-luminance (**Cr**) chrominance information, and blue-minus-luminance (**Cb**) chrominance information as the components of video information in 4:2:2 format. A video input processor **202** converts the **Y**, **Cr**, and **Cb** signals to 4:2:0 sampling format by performing a 2:1 decimation of each of the **Cr** and **Cb** signals in both the vertical and the horizontal directions after separable lowpass anti-aliasing filtering in both directions.

Video compression apparatus **203** receives the **Y**, **Cr,** and **Cb** signals in 4:2:0 sampling format for video compression encoding, which is carried out on an intraframe basis on every one of the frames in accordance with the same intraframe compression encoding protocol that is used on only the first, anchor frame of each group of pictures in MPEG-2 video compression encoding. Trickplay extraction circuitry **204** extracts trickplay information for application to the to the data-frame assembler **6**. This trickplay information comprises the zero-frequency and other low-frequency DCT coefficients of the succession of DCT blocks of every frame (or, alternatively, of only periodically occurring frames selected as anchor frames in less preferred embodiments of the invention), as computed in the video compression apparatus **203**.

The amount of compressed video data is increased in the FIGURE 3 camcorder as compared to the FIGURE 1 camcorder, owing to the increased number of pixels per frame. So the compressed high-definition video information in each frame is permitted to occupy twenty recording tracks on the magnetic video tape in the FIGURE 3 camcorder, rather than just the ten tracks allotted to each frame of standard definition video information in the FIGURE 1 camcorder.

The low-power NTSC television transmitter **22** is dispensed with, owing to the video camera **201** for generating progressively scanned frames of video information in 16:9 aspect ratio. Since the transmitter **22** is not included in the FIGURE 3 camcorder, the compression-encoded-audio decoder **23** is omitted. The FIGURE 3 camcorder has a liquid-crystal-display (LCD) viewfinder **225** with a viewscreen having 16:9 aspect ratio. The compression-encoded-video decoder **24** is retained, to generate decompressed video signal for viewfinder drive circuitry. During playback (or recording and playback), viewfinder drive circuitry **226** can supply drive signals to the LCD viewfinder **225** in response to **Y**, **Cr**, and **Cb** signals in 4:2:0 sampling format supplied by the decoder **24**. During recording or previewing, viewfinder drive circuitry **226** can supply drive signals to the LCD viewfinder **225** in response to **Y**, **Cr**, and **Cb** signals in 4:2:0 sampling format supplied by the video input processor **202**. The drive signals applied to the LCD viewfinder **225** are typically **R**, **G** and **B** drive signals.

A low-power NTSC television transmitter is used in a variant of the FIGURE 3 camcorder, with arrangements to transmit the 16:9 aspect ratio video images in letter-box format. In such variant the compression-encoded-audio decoder **23** is retained.

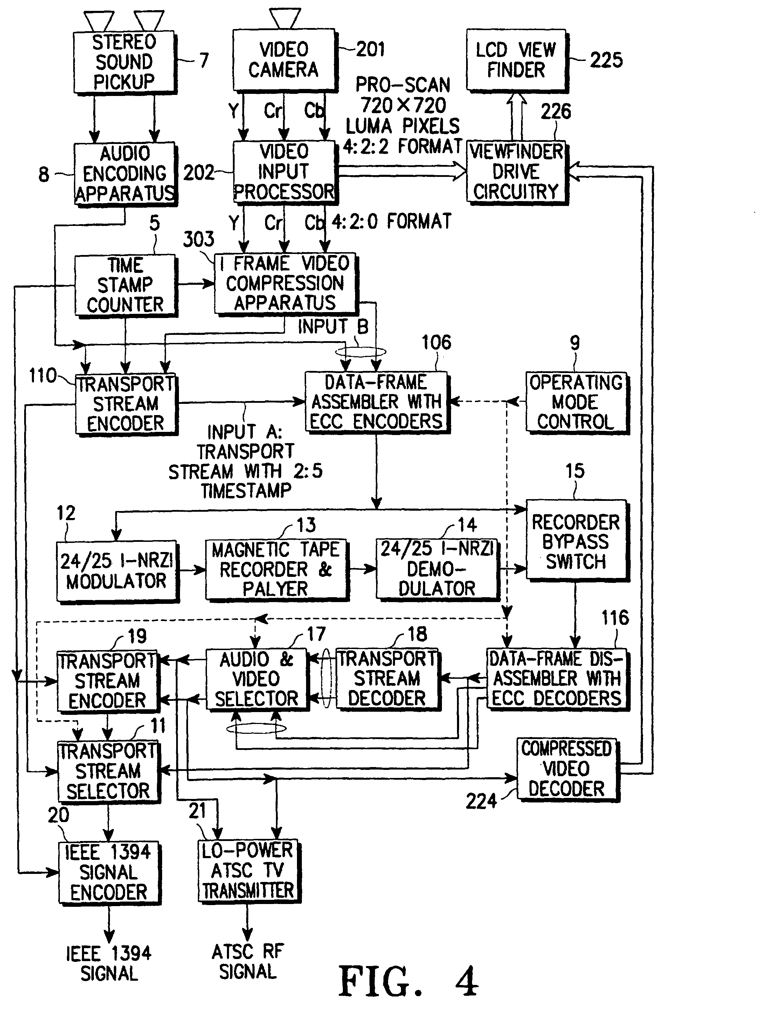

FIGURE 4 shows a camcorder that differs from the FIGURE 3 camcorder in the way that trickplay is implemented. The DCT blocks are recorded in the tracks on the electromagnetic tape so that the zero-frequency and other low-frequency DCT coefficients of the succession of DCT blocks of each frame occupy leading portions of syncblocks. During trickplay these zero-frequency and other low-frequency DCT coefficients are recovered for generating a low-resolution display, and the higher-frequency DCT coefficients are discarded. With twenty tracks being read in parallel, eliminating the trickplay bands conventionally used in digital video cassette recording increases the average payload data rate from 38.6 million bits per second to 46 million bits per second.

The trickplay extraction circuitry **204** is omitted in the FIGURE 4 camcorder, and the video compression apparatus **203** is replaced by video compression apparatus **303** which need not include provisions to facilitate connection to the trickplay extraction circuitry **204**. In the FIGURE 4 camcorder the data-frame assembler 6 is replaced by the data-frame assembler **106**, which omits syncblocks descriptive of trickplay bands from its transport stream assembly procedures and increases the number of syncblocks containing normal-play video packet information in each frame. The data-frame assembler **106** shuffles the order of the DCT coefficients of the succession of DCT blocks of each frame so the direct or zero-frequency DCT coefficient and other low-frequency DCT coefficients occupy leading portions of syncblocks. The Reed-Solomon error correction encoder **9** and the Reed-Solomon error correction decoder **13** are replaced by the Reed-Solomon error correction encoder **109** and the Reed-Solomon error correction decoder **113,** respectively, because of the increased number of video syncblocks in an error-correction-coding data frame. The data-frame disassembler **16** is replaced by the data-frame disassembler **116** that takes into account the reproduced transport stream omitting syncblocks descriptive of trickplay bands and replacing the omitted syncblocks with syncblocks containing further video packet information.

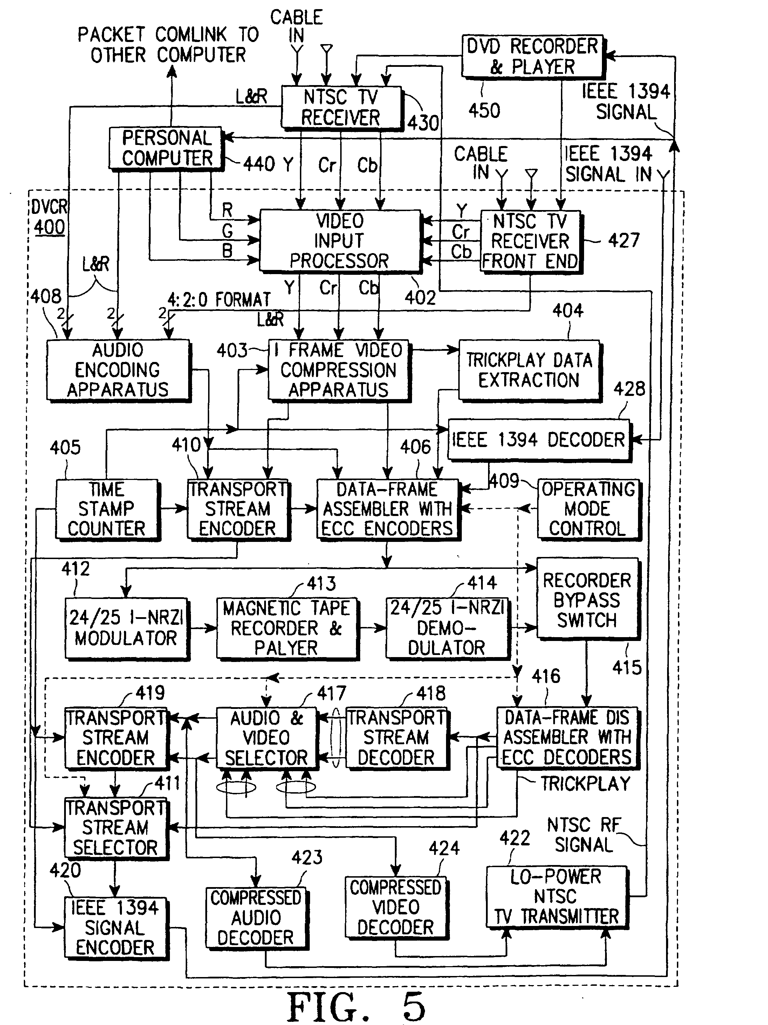

FIGURE 5 shows a video recording and reproduction system in which video compression is done in accordance with the invention. The system is constructed around a digital videocassette recorder (and player), or DVCR, **400** including a component magnetic tape recorder and player **413**. The recorder and player **413** can be used for playback from the magnetic tape in a digital videocassette recorded by one of the camcorders of FIGURES 1, 2, 3 and 4. In fact, a digital videocassette recorded by the FIGURE 1 camcorder is suitable for playing on a standard-density (SD) digital television tape recorder and player, or on an SD digital television tape player, without modification of the playback electronics. Elements **402** - **424** of the DVCR **400** substantially correspond to elements 2 - 24, respectively, of the FIGURE 1 camcorder, both as to structure and individual operation. The DVCR **400** differs from a conventional SD DVCR, being modified to include the video input processor **402**, the video compression apparatus **403**, the trickplay data extraction circuitry **404,** the time stamp counter **405,** the audio encoding apparatus **408,** the transport stream encoders **410** and **419**, the transport stream selector **411**, the audio and video selector **417**, the transport stream decoder **418**, the IEEE 1394 signal assembler, the compressed audio decoder **423** and the compressed video decoder **424**. The data-frame assembler **406** with ECC encoders and the data-frame disassembler **416** with ECC decoders are modified from those used in an SD DVCR, to make allowance for the inclusion of trickplay syncblocks in each data frame that is recorded. The 24/25 I-NRZI modulator **412**, the 24/25 I-NRZI demodulator **414**, the low-power NTSC television transmitter **422** and the NTSC television receiver front end **427** are substantially the same as in an SD DVCR.

The video input processor **402** selects video information to be compressed from an NTSC analog television receiver **430** outside the DVCR **400**, from a personal computer **440** outside the DVCR **400**, or from a television receiver front end **427** within the DVCR **400**. The video information selected by video input processor **402** for compression is converted to a luminance signal **Y**, a red-minus-luminance color difference signal **Cr**, and a blue-minus-luminance color difference signal **Cb** in 4:2:0 sampling format for application to the video compression apparatus **403**. The video information from the television receiver front end **427** comprises a luminance signal **Y**, a red-minus-luminance color difference signal **Cr**, and a blue-minus-luminance color difference signal **Cb** in 4:2:2 sampling format. The **Y**, **Cr**, and **Cb** signals are converted to 4:2:0 sampling format by performing a 2:1 decimation in both the vertical and the horizontal directions after lowpass anti-aliasing filtering.

FIGURE 5 shows the video information from the personal computer **440** being supplied as a red signal **R**, a green signal **G** and a blue signal **B**. FIGURE 5 shows the video information from the analog television receiver **430** being supplied as a luminance signal **Y** and orthogonal color difference signals **Cr** and **Cb**. Alternatively, video information can be supplied from the analog TV receiver **430** as a further red signal **R**, a further green signal **G** and a further blue signal **B**. The video input processor **402** includes color matrixing circuitry (not explicitly shown) for converting **R**, **G** and **B** video signals to **Y**, **Cr** and **Cb** video signals, which are then converted to 4:2:0 sampling format by performing suitable decimations in both the vertical and the horizontal directions after lowpass anti-aliasing filtering. In yet another alternative arrangement, video information can be supplied from the analog TV receiver **430** as a luminance signal **Y** and orthogonal color difference signals **I** and **Q**. The video input processor **402** will then be modified to include color matrixing circuitry for converting **I** and **Q** video signals to **Cr** and **Cb** video signals.

In FIGURE 5 the video compression apparatus **403** has trickplay data extraction circuitry **404** associated therewith. The data-frame assembler **406** with ECC decoders is designed to place the trickplay data into selected syncblocks with prescribed locations within each data frame. The time stamp counter **405** counts system clock cycles in each group of sixteen video frames, to provide time stamp information to the video compression apparatus **403**, to the IEEE 1394 signal encoder **420**, and to the transport stream encoders **410** and **419**. The audio encoding apparatus **408** within the DVCR **400** of FIGURE 5 performs compression encoding of left-channel (**L**) and right-channel (**R**) signal signals from the NTSC television receiver **430**, from the personal computer **440**, or from the NTSC television receiver front end **427** within the DVCR **400**.

Responsive to a control setting by a user of the FIGURE 5 DVCR **400**, an operating mode control **409** conditions the DVCR to operate in accordance with a first data-frame-assembly mode. In this first data-frame-assembly mode the compressed video information from the video compression apparatus **403** and the compressed audio information from the audio encoding apparatus **408** are utilized directly by the data-frame assembler **406**.

The operating mode control **409** can alternatively have a user control setting that conditions the FIGURE 5 DVCR for operation in accordance with a second data-frame-assembly mode. In this second data-frame-assembly mode a transport stream supplied from the transport stream encoder **410** is utilized as input signal by the data-frame assembler **406**, rather than the compressed video information supplied directly from the video compression apparatus **403** and the compressed audio information from the audio encoding apparatus **408**. The transport stream encoder **410** parses the compressed video information into pairs of consecutive MPEG-2 video packets preceded by packet headers identifying them as video packets. The transport stream encoder **410** parses the compressed audio information into audio packets preceded by packet headers identifying them as audio packets. The transport stream encoder **410** assembles the video and audio packets into a first transport stream supplied to a transport stream selector **411**. The transport stream encoder **410** also assembles a second transport stream differing from the first transport stream in that extra time stamps as extracted from the time stamp counter **405** are inserted. This is done to implement 2:5 conversion, in which each consecutive pair of the 188-byte packets in this second transport stream are written into five rows of the memory in the data-frame assembler **406**, for subsequent reading as five sync blocks from the assembler **406**.

The operating mode control **409** can alternatively have a user control setting that conditions the FIGURE 5 DVCR for operation in accordance with a third data-frame-assembly mode. In this third data-frame-assembly mode the response of an IEEE 1394 signal decoder **428** to an IEEE 1394 signal supplied to the DVCR **400** supplies the transport stream accepted as input signal by the data-frame assembler **409**. The IEEE 1394 signal decoder **428** eliminates the IEEE 1394 headers to recover an MPEG-2 transport stream. The decoder **428** inserts extra time stamps secured from the time stamp counter **405** into the recovered MPEG-2 transport stream. This implements 2:5 conversion of the transport stream when it is subsequently loaded into the data-frame assembler **409**.

After error correction coding is completed by the ECC encoders in the data-frame assembler **409**, sync blocks are read from from the assembler **409** to a 24/25 modulator **412** as a modulating signal that governs the generation of interleaved-NRZI modulation. This I-NRZI modulation is supplied to the recording amplifier of a magnetic tape recorder (and player) **413** in the VCR **400**.

During videocassette playback and during the monitoring of videocassette recording, a playback amplifier in the VCR **400** supplies 24/25 I-NRZI modulation to the 24/25 I-NRZI demodulator **414**, which reproduces the error-correction-coded syncblocks supplied from the data-frame assembler **406** for recording. During the monitoring of videocassette recording, the recorder bypass switch **415** is set in response to the desire of a user to select error-correction-coded syncblocks to the data-frame disassembler **416** either from the data-frame assembler **406** or from the 24/25 I-NRZI demodulator **414**.

The data-frame disassembler **416** corrects errors in the signal supplied thereto and accordingly includes decoders for the Reed-Solomon forward error-correction-codes. The data-frame disassembler **416** includes temporary-storage memory for video, which memory is operated as an interleaver for the video ECC decoder. The data-frame disassembler **416** also includes temporary-storage memory for audio, which memory is operated as an interleaver for the audio ECC decoder.

When the user control setting of the operating mode control **409** selects normal play in accordance with the first data-frame-assembly mode, the audio/video selector **417** selects as its output signal compressed video information and compressed audio information read from respective temporary-storage memory in the data-frame disassembler **416**. The compressed video information and compressed audio information are read to the audio/video selector **417** after the ECC decoders in the data-frame disassembler **16** complete error correction of the information. In this mode the compression-encoded-video decoder **424** decodes compressed video information from the audio/video selector **417** on an I-frame-only basis. If the compression-encoded-video decoder **424** has the capability of decoding **B** or **P** frames as well as **I** frames, the decoder **424** is conditioned to decode on an I-frame-only basis responsive to the picture headers in the compressed video signal.

When the user control setting of the operating mode control **409** selects normal-play in accordance with the second or third data-frame-assembly mode, the audio/video selector **417** selects as its output signal compressed video information and compressed audio information supplied by a transport stream decoder **418**. The compressed video information and compressed audio information are decoded from video packets and audio packets read to the decoder **418** from respective temporary-storage memory in the data-frame disassembler **416**. The video packets and audio packets are read to the transport stream decoder **418** after error correction of the packets by the ECC decoders in the data-frame disassembler **416** has been completed. If the compression-encoded-video decoder **424** has the capability of decoding **B** or **P** frames as well as **I** frames, the decoder **424** is conditioned to decode on an I-frame-only basis responsive to the picture headers in the compressed video signal indicating that this was the mode in which the DVCR tape cassette being played back was recorded.

When the user control setting of the operating mode control **409** selects trickplay, the output signal that the audio/video selector **417** supplies comprises null compressed audio information supplied as wired input and compressed video information recorded as trickplay signal, then read from temporary-storage memory in the data-frame disassembler **416** during playback. The audio recovered by the compression-encoded-audio decoder **423** is muted. If the compression-encoded-video decoder **424** has the capability of decoding **B** or **P** frames as well as **I** frames, the decoder **424** is conditioned to decode on an I-frame-only basis responsive to the user control setting of the operating mode control **409**.

The compressed video information and compressed audio information the audio/video selector **417** selects as its output signal is supplied to a transport stream encoder **419**. The transport stream encoder **419** supplies the transport stream selector **411** with a transport stream that is available during normal play in accordance with the first data-frame-assembly mode. The transport stream selector **411** responds to control setting by the user of the FIGURE 1 camcorder either to reproduce in its output signal the transport stream before recording, as supplied thereto by the transport stream encoder **410**, or another transport stream after playback from the tape recorder **413**. The transport stream selector **411** automatically selects the output signal from the transport stream encoder **419** as this other transport stream responsive to the operating mode control **409** selecting playback in accordance with the first data-frame-assembly mode. Responsive to the operating mode control **409** selecting playback in accordance with the second data-frame-assembly mode, the transport stream selector **411** automatically selects the output signal from the data-frame disassembler **416** to the transport stream decoder **418** as the other transport stream after playback that the selector **421** can reproduce as its ouput signal.

In a variation from what is shown in FIGURE 5 that does not alter ultimate camcorder performance very much, the other transport stream after playback from the tape recorder **413** can always be the output signal from the transport stream encoder **419**.

The transport stream reproduced in the output signal of the transport stream selector **411** is supplied to an IEEE 1394 signal encoder **420**. The IEEE 1394 signal encoder **420** prefaces each 188-byte packet in the transport stream with a 4-byte time stamp, apportions each 192-byte time-stamped packet among shorter data blocks (e. g., each of 96-byte length), and precedes each data block with a header for accessing the transmission line and a CIP header. FIGURE 5 shows the IEEE 1394 si from the IEEE 1394 signal encoder **420** being supplied to the personal computer **440** and to the digital video disk recorder and player **450** as respective input signals to them. FIGURE 5 shows the personal computer **440** arranged for connection with another computer (not explicitly shown) via a packet communications link - for example, the internet. The personal computer **440** can also be connected through a server to other types of terminal.

FIGURE 5 also shows the low-power NTSC television transmitter **422** transmitting a radio-frequency signal to the analog television receiver **430**. More particularly, the compression-encoded-audio decoder **423** supplies audio signals to the transmitter **422** to be combined to form a signal for modulating the frequency of the audio carrier supplied by the transmitter **422**. And the compression-encoded-video decoder **424** supplies video signals to be combined to form a composite video signal for modulating the amplitude of the video carrier supplied by the transmitter **422**. Since it is desirable to be able to play digital videotape recordings with MPEG-2 coded video, the compressed video decoder **424** is preferably a conventional MPEG-2 video decoder.

The DVCR **400** provides a convenient way for consolidate audio and visual material in a form lending itself to editing with the aid of the personal computer **440** that is appropriately programmed, that has provisions for monitoring the material to be edited, and that is provided with a storage medium that can store a long sequence of pictures. Various video tape recordings made with a camcorder of the type shown in FIGURE 1 can be consolidated in a single digital video cassette tape for playback to the personal computer **440**. Consolidated material can also include or consist of television programming received by the television receiver **430** off the air, from cable, from the digital video disk (recorder and) player **450** or from another digital video recorder. After editing, the DVCR **400** provides a way for recording edited material, as furnished to it from the personal computer **440**.

FIGURE 6 shows another video recording and reproduction system in which video compression is done in accordance with the invention, differing from that of FIGURE 5 in the way that trickplay is implemented. In the digital videocassette recorder (and player) **500** of FIGURE 6, the DCT blocks are recorded in the tracks on the electromagnetic tape so that the zero-frequency and other low-frequency DCT coefficients of the succession of DCT blocks of each frame occupy leading portions of syncblocks, to avoid the need for trickplay bands in the video recording portions of the magnetic tape recording. The FIGURE 6 DVCR **500** is suitable for playing videocassettes recorded by the FIGURE 2 camcorder.

The FIGURE 6 DVCR **500** differs from the FIGURE 5 DVCR **400** in not having trickplay data extraction circuitry **404**. The data-frame assembler **406** is replaced by a data-frame assembler **506**, which omits syncblocks descriptive of trickplay bands from its data frame assembly procedures and increases the number of syncblocks containing normal-play video packet information in each frame. The data-frame assembler 506 includes circuitry for shuffling the order of the DCT coefficients of the succession of DCT blocks of each frame so the direct or zero-frequency DCT coefficient and other low-frequency DCT coefficients occupy leading portions of syncblocks. The compressed video detector **424**, which can be a standard MPEG-2 compressed video decoder, is replaced by a compressed video detector **524** that additionally includes capability for extracting trickplay information from the zero-frequency DCT coefficient and other low-frequency DCT coefficients that occupy leading portions of syncblocks in the digital videotape recordings made in accordance with the aspect of the invention embodied in the FIGURE 6 DVCR **500**.

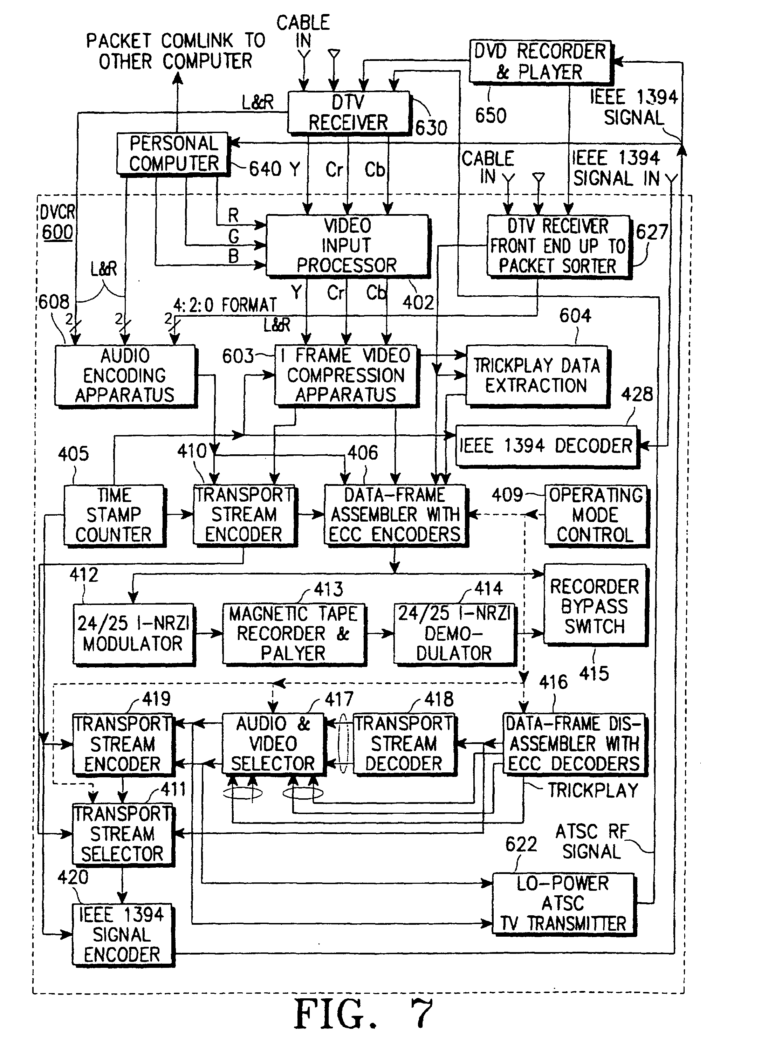

FIGURE 7 shows a modification of the FIGURE 5 system that uses an advanced digital videocassette recorder (and player) **600** capable of recording progressively scanned frames of video information including luminance (**Y**) information having **720** active scan lines in each frame and 1280 pixels in each scan line, as supplied by a video camera **601** for responding to images in 16:9 aspect ratio or from another source. One other source is a digital television receiver front end **627** with elements up top and including a packet sorter that is included within the DVCR **600**. Other sources are a digital television receiver **630** and a personal computer **640** located outside the DVCR **600**. A video input processor **602** processes the progressively scanned frames of video information from a selected one of these sources to generate **Y**, **Cr**, and **Cb** signals in 4:2:0 sampling format. Video compression apparatus **603** receives the **Y**, **Cr**, and **Cb** signals in 4:2:0 sampling format including luminance (**Y**) information having 720 active scan lines in each frame and 1280 pixels in each scan line. Compressive encoding of these signals is carried out by video compression apparatus **603** on an intraframe basis on every one of the frames, in accordance with the same intraframe compression encoding protocol used on only the first, anchor frame of each group of pictures in MPEG-2 video compression encoding. Trickplay extraction circuitry **604** is substantially the same as trickplay extraction circuitry **404** of FIGURE 4 except for taking the different viewscreen aspect ratio into account. Audio encoding apparatus 608 differs from the audio encoding apparatus **408** of FIGURE 4 in that it has the capability of accepting AC-3 audio packets from the digital television receiver **630** for selective transfer to the transport stream encoder **410**.

The amount of compressed video data is increased in the FIGURE 7 DVCR **600** as compared to the FIGURE 5 DVCR **400**, owing to the increased number of pixels per frame. So the compressed high-definition video information in each frame is permitted to occupy twenty recording tracks on the magnetic video tape in the FIGURE 7 DVCR **600**, rather than just the ten tracks allotted to each frame of standard definition video information in the FIGURE 5 DVCR **400**.

The IEEE 1394 Standard signal from the IEEE 1394 signal encoder **420** is supplied as an output signal from the ATV tape recorder and player **600** applied in FIGURE 7 to the personal computer **630** and to a digital video disk recorder and player **650**. FIGURE 7 shows the personal computer **630** arranged for connection with another computer (not explicitly shown) via a packet communications link - for example, the internet. The personal computer **630** can also be connected through a server to other types of terminal. The digital video disk recorder and player **650** is arranged to supply its output signal to the DTV receiver **630** for viewing.

FIGURE 7 shows the DVCR **600** including a low-power ATSC digital television transmitter **622** connected for transmitting ATSC digital television signal to the DTV receiver **630** in response to transport stream received from the transport stream selector **411**.

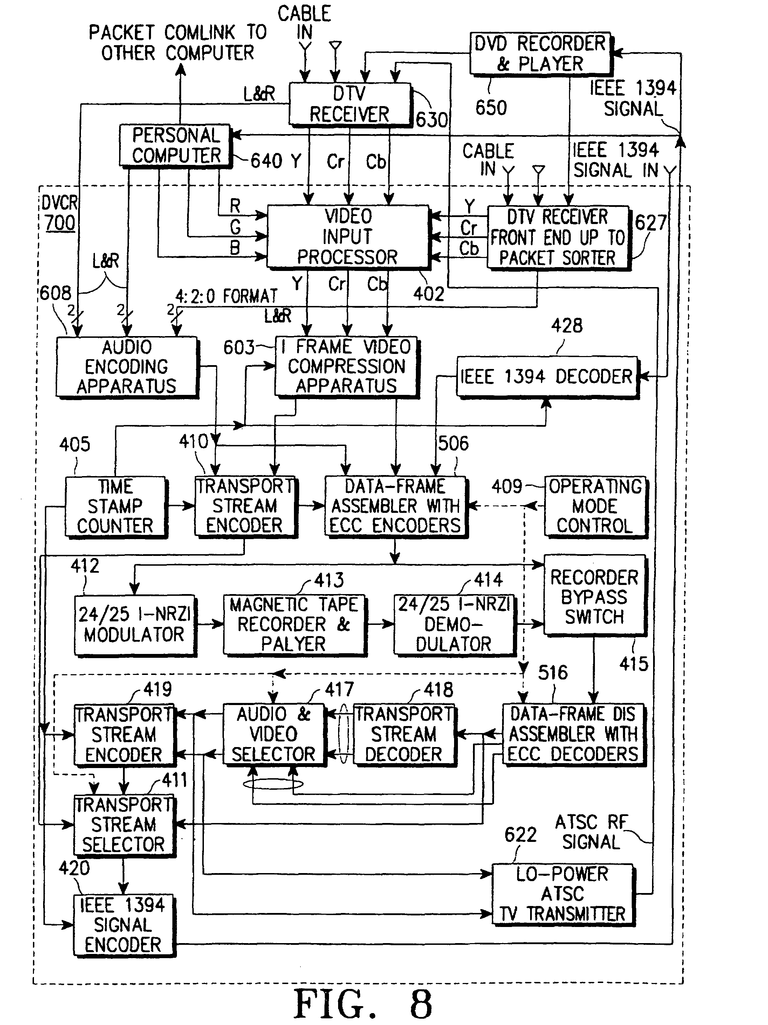

FIGURE 8 shows another video recording and reproduction system in which video compression is done in accordance with the invention, using an advanced digital television tape recorder and player **700** differing from the ATV tape recorder and player **600** of FIGURE 7 in the way that trickplay is implemented. In the ATV tape recorder and player **700** of FIGURE 8, the DCT blocks are recorded in the tracks on the electromagnetic tape so that the zero-frequency and other low-frequency DCT coefficients of the succession of DCT blocks of each frame occupy leading portions of syncblocks, to avoid the need for trickplay bands in the video recording portions of the magnetic tape recording. In the ATV tape recorder and player **700** of FIGURE 8, the trickplay data extraction circuitry **606** is dispensed with and the data-frame assembler **406** is replaced by a data-frame assembler **506**, which omits syncblocks descriptive of trickplay bands from its data-frame assembly procedures and increases the number of syncblocks containing normal-play video packet information in each frame. The data-frame assembler **506** shuffles the order of the DCT coefficients of the succession of DCT blocks of each frame so the direct or zero-frequency DCT coefficient and other low-frequency DCT coefficients occupy leading portions of syncblocks. The data-frame disassembler **416** is replaced by the data-frame disassembler **516**, because of the increased number of video syncblocks in an error-correction-coding data frame.

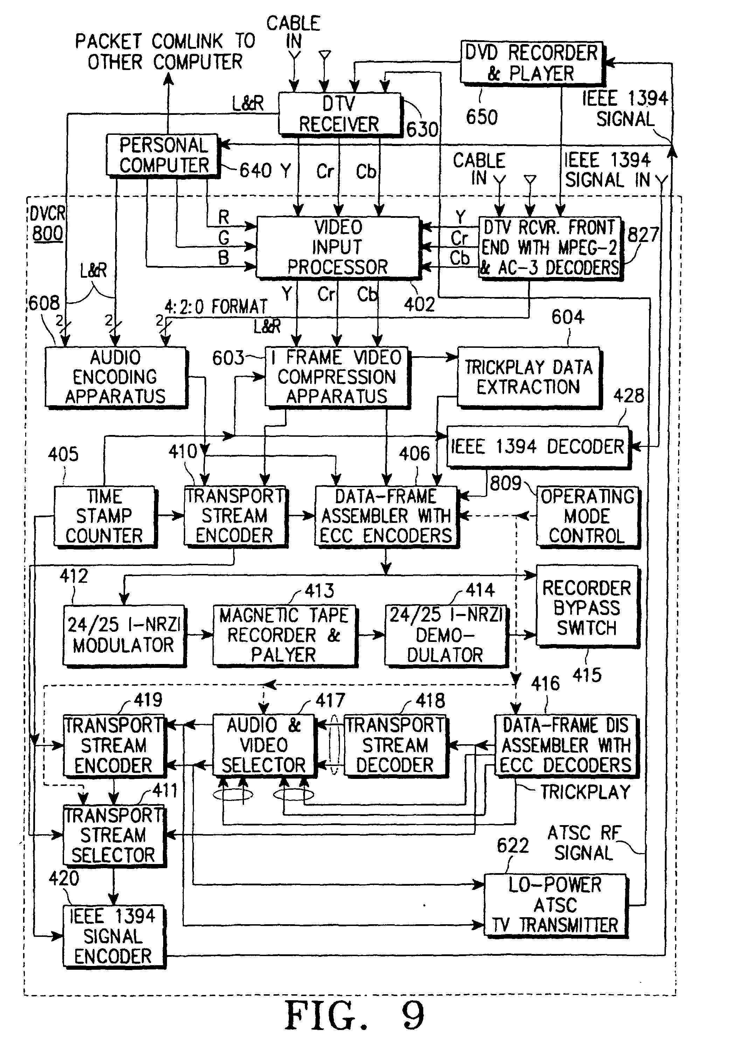

FIGURE 9 shows a modification **800** of the FIGURE 7 DVCR **600**. In this modified DVCR **800** of FIGURE 9, the DTV front end **627** up to and including the packet sorter is replaced by a DTV front end **827** further including an MPEG-2 decoder for compressed video (and possibly audio) information and an AC-3 decoder for compressed audio information. The DVCR **800** comprises an operating mode control **809** having user control settings that conditions the FIGURE 9 DVCR for operation in accordance with a first data-frame-assembly mode in which compressed video and audio information from the video compression apparatus **603** and from the audio encoding apparatus **608** are recorded without being encoded in a transport stream, a second data-frame-assembly mode in which the transport stream generated by the transport stream encoder **410** is recorded, a third data-frame-assembly mode in which the transport stream generated by the IEEE 1394 signal decoder **428** is recorded, and a fourth data-frame-assembly mode in which compressed video and audio information from the DTV front end **827** are recorded without being encoded in a transport stream.

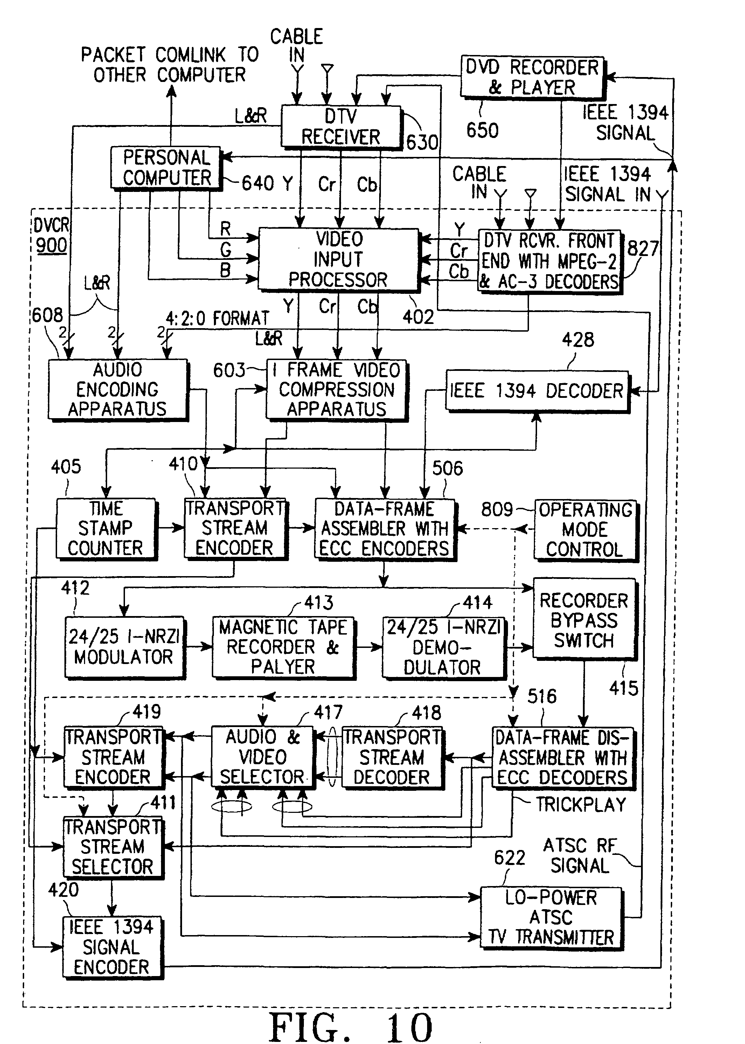

FIGURE 10 shows a modification **900** of the FIGURE 8 DVCR **700** of FIGURE 8. In this modified DVCR **900** of FIGURE 10, the DTV front end **627** up to the packet sorter is replaced by a DTV front end **827** including an MPEG-2 decoder in addition to the packet sorter. The DVCR **900** also replaces the operating mode control **409** with the operating mode control **809**.

In variants of the DVCRs **600** and **800**, the transport stream from the disassembler **406**, rather than the transport stream from the transport stream selector **411**, is supplied to the low-power ATSC DTV transmitter **622** as input signal. In variants of the DVCRs 700 and **900**, the transport stream from the disassembler **406**, rather than the transport stream from the transport stream selector **411**, is supplied to the low-power ATSC DTV transmitter **622** as input signal. The low-power ATSC DTV transmitter **622** in any of the DVCRs **600**, **700**, **800** and **900** can be viewed as providing a wired microwave link to the DTV receiver **430**. This can be replaced by a microwave link using through-the-air transmission at television broadcast frequencies. A similar microwave link can be established between the camcorder of FIGURE 3 or 4 and the DTV receiver front end **627** of the DVCR **600** or **700**. A similar microwave link can also be established between the camcorder of FIGURE 3 or 4 and the DTV receiver front end **827** with MPEG-2 and AC-3 decoders of the DVCR **800** or **900**. In professional apparatus the microwave transmission and reception frequencies can be in a band higher in frequency than that used for television broadcasting, and scrambling of the transmitted data is possible.

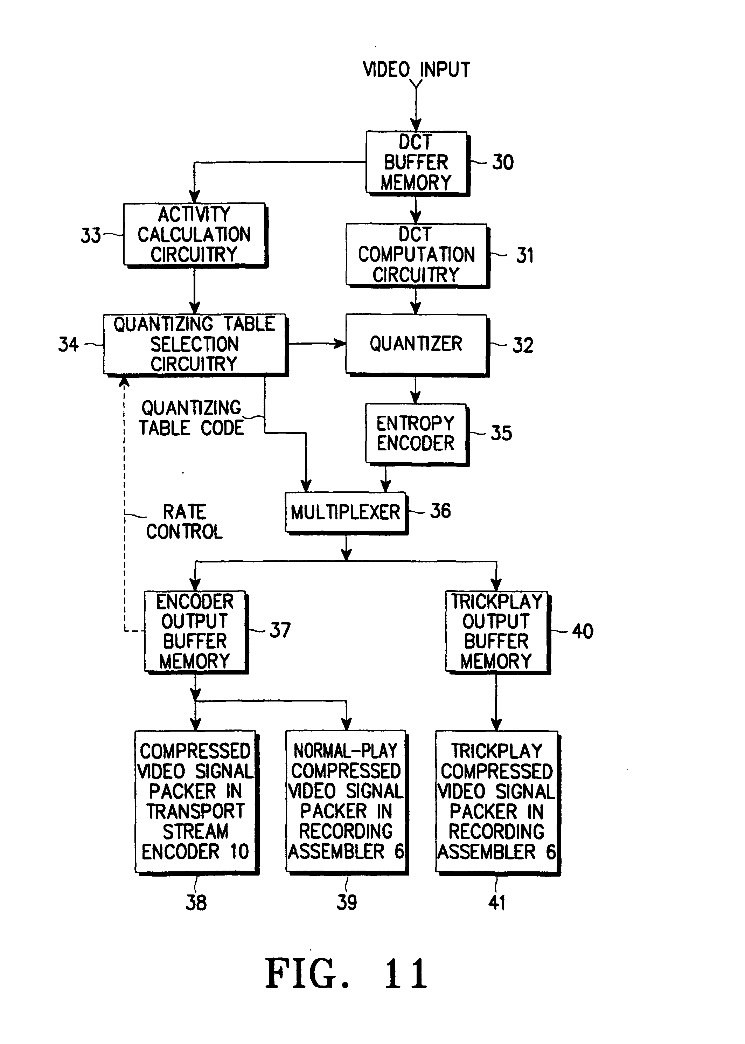

FIGURE 11 shows in greater detail the circuitry for compressing video and generating a transport stream used in the FIGURE 1 camcorder. Similar circuitry is used in the FIGURE 3 camcorder and in the digital tape recorders **400**, **600** and **800** of FIGURES 5, 7 and 9. An input buffer memory **30**, DCT computation circuitry **31**, quantizer circuitry **32**, activity calculation circuitry **33**, quantizing table selection circuitry **34**, an entropy encoder **35**, a multiplexer **36** and an encoder output buffer memory **37** shown in FIGURE 11 are elements of the video compression apparatus **3** of FIGURE 1. In practice, the DCT computation circuitry **31**, quantizer circuitry **32** and activity calculation circuitry **33** may be implemented using a microprocessor. A. compressed-video-signal packer **38** of FIGURE 11 is associated with the transport stream encoder **10** of FIGURE 1, and a compressed-video-signal packer **39** of FIGURE 11 is associated with the data-frame assembler **6** of FIGURE 1. A trickplay output buffer memory **40** of FIGURE 11 is included within the trickplay data extraction circuitry **4** of FIGURE 1. A compressed-video-signal packer **41** of FIGURE 11 is associated with the data-frame assembler **6** of FIGURE 1.

Video input comprising **Y**, **Cr**, and **Cb** signals in 4:2:0 sampling format is loaded into the input buffer memory **30**, which stores somewhat more than a frame of samples and permits image blocks eight luma pixels square to be considered one after the other. DCT computation circuitry **31** computes DCT coefficients for the **Y**, **Cr**, and **Cb** components of each successively considered image block, normalizing the higher-order DCT coefficients with regard to the zero-frequency DCT coefficient and supplying the computed DCT coefficients in zigzag scanning order to the quantizer circuitry **32**.

The activity calculation circuitry **33** estimates the degree of activity in the image. First, the average value of the pixels in each DCT block is calculated. Then, the difference between the value of each pixel in each DCT block and its average value is determined, and the differences are squared. The squared differences are accumulated for each block, and the resulting sum is normalized by dividing it by the number of pixels per block. The normalized sums for all the DCT blocks in a frame are accumulated, the accumulation result for the frame is multiplied by a first constant value A, and the resulting product has a second constant value B added to it determine the activity in the frame, which directly relates to an estimation of the number of bits in the entropy coding of the frame.

This measure of activity in the frame is supplied to quantization table selection circuitry **34**, which uses this measure for selecting the initial table of quantizing values for the DCT coefficients that the circuitry **34** supplies to the quantizer circuitry **32**. The quantization table selection circuitry **34** supplies a code identifying the table of quantizing values for the DCT coefficients that the circuitry **34** supplies to the quantizer circuitry **32.** The quantized DCT coefficients supplied from the quantizer circuitry **32** are supplied to an entropy encoder **35**, sometimes referred to as a "Huffman encoder" for lossless coding including steps of run-length coding and variable-length coding.

A multiplexer **36** receives the entropy encoding results from the entropy encoder **35** and also receives the codes identifying the tables of quantizing values for the DCT coefficients that the circuitry **34** supplies to the quantizer circuitry **32**. Whenever there is immediately to be a change in the table of quantizing values the quantizer circuitry **32** uses, the multiplexer **36** inserts the code identifying the table next to be used into the codestream it supplies as its output signal. The inserted code serves as a prefix for the entropy encoding results from the entropy encoder **35** that are then reproduced in the codestream the multiplexer **36** supplies as its output signal.

An encoder output buffer memory **37** of a first-in/first-out type temporarily stores the codestream the multiplexer **36** supplies as its output signal. The buffer memory **37** has storage capacity for a fraction (e. g., one-quarter) of the amount of code acceptable in a video frame and signals the quantization table selection circuitry **34** when enough of that storage capacity is used to risk overfilling. Responsive to such signaling, the quantization table selection circuitry **34** selects a quantization table to be used by the quantizer circuitry **32** in order to reduce its rate of bit production. When the storage capacity of the buffer memory **37** is substantially under-utilized for a period of time, the quantization table selection circuitry **34** is signaled to select a quantization table to be used by the quantizer circuitry **32** in order to increase its rate of bit production. This reduces the likelihood of the buffer memory **37** being emptied and thereby avoids the need to use null codes in the codestream supplied from the buffer memory **37** to the compressed-video-signal packers **38** and **39**.

The compressed-video-signal packer **38** parses the codestream supplied from the buffer memory **37** into (184-n)-byte video packet payload lengths and prefaces each video packet payload with a respective video packet header. This video packet header includes an **I** frame flag code. The video packets are incorporated within the transport stream supplied from the transport stream encoder **10** to the data-frame assembler **6**. In the data-frame assembler **6**, as part of a 2:5 conversion procedure, the video packets are inserted into prescribed sync blocks of each data frame being assembled for recording and then are subjected to two-dimensional Reed-Solomon encoding.

The compressed-video-signal packer **39** parses the codestream supplied from the buffer memory **37** into 77-byte segments for direct insertion into temporary memory within the data-frame assembler **6** at prescribed sync block locations of a data frame being assembled. The 77-byte segments are subsequently subjected to two-dimensional Reed-Solomon encoding procedures within the data-frame assembler **6**.

The trickplay output buffer memory **40** is of random-access type and temporarily stores zero- and low-frequency DCT components from the codestream the multiplexer **36** supplies as its description of each sixteenth image frame. Different portions of the contents of the trickplay output buffer memory **40** are read out at various times to the compressed-video-signal packer **41** to be formed into bytes and inserted by the data-frame assembler **6** into prescribed sync blocks of each data frame assembled for recording.

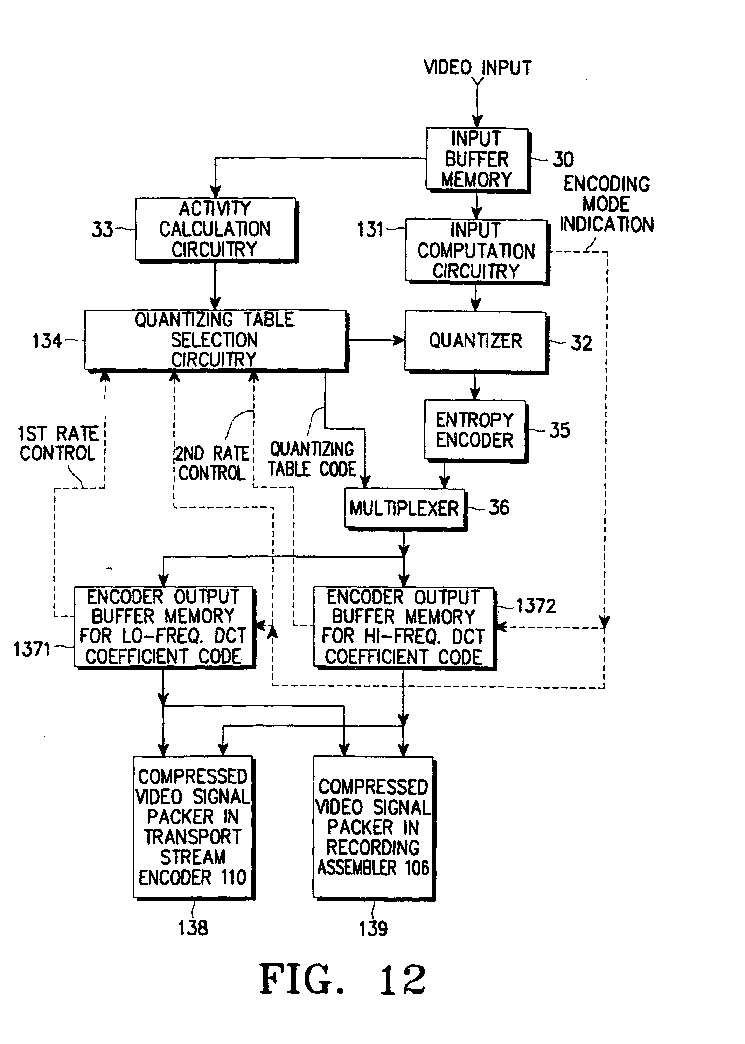

FIGURE 12 shows in greater detail the circuitry for compressing video and generating a transport stream used in the FIGURE 2 camcorder. Similar circuitry is used in the FIGURE 4 camcorder and in the digital tape recorders **500**, **700** and **900** of FIGURES 6, 8 and 10. The input buffer memory **30**, DCT computation circuitry **131**, the quantizer circuitry **32**, the activity calculation circuitry **33**, quantizing table selection circuitry **134,** the entropy encoder **35**, the multiplexer **36**, an encoder output buffer memory **1371** for codestream coding zero-and low-frequency DCT coefficients, and an encoder output buffer memory **1372** for codestream coding high-frequency DCT coefficients shown in FIGURE 12 are elements of the video compression apparatus **103** of FIGURE 2. In practice, the DCT computation circuitry **131**, quantizer circuitry **32** and activity calculation circuitry **33** may be implemented using a microprocessor. A compressed-video-signal packer **138** of FIGURE 12 is associated with the transport stream encoder **110** of FIGURE 2, and a compressed-video-signal packer **139** of FIGURE 12 is associated with the data-frame assembler **106** of FIGURE 2.

The transport stream generated by the transport stream encoder **110** comprises video and audio packets, and is characterized by the video packets being formed with the codes descriptive of the zero- and low-frequency DCT coefficients immediately after syncblock headers, so as to facilitate trickplay.

The DCT computation circuitry **131** is implemented so as to provide an ENCODING MODE INDICATION indicative of whether the computation results are low-frequency DCT coefficients (including zero-frequency coefficients) or are high-frequency DCT coefficients. When the ENCODING MODE INDICATION indicates that the computation results are zero- or low-frequency DCT coefficients, the buffer memory **1371** is conditioned to store the computation results, and the quantizing table selection circuitry **134** conditions the quantizer **32** to apply quantizing tables for the zero- or low-frequency DCT coefficients. When the ENCODING MODE INDICATION indicates that the computation results are high-frequency DCT coefficients, the buffer memory **1372** is conditioned to store the computation results, and the quantizing table selection circuitry **134** conditions the quantizer **32** to apply quantizing tables for the high-frequency DCT coefficients.

The buffer memory **1371** is a first-in/first-out memory for storing two parallel bitstreams. One of the bitstreams composed of the entropy code and quantizing table code associated with the zero- and low-frequency DCT coefficients. The other bitstream is composed of markers indicating breaks between DCT blocks in the computation of the zero- and low-frequency DCT coefficients. The markers facilitate the compressed-video-signal packers **138** and **139** arranging the codes descriptive of the zero- and low-frequency DCT coefficients in bit ranges immediately after syncblock headers. These bit ranges extend for prescribed intervals or somewhat longer. The compressed-video-signal packer **138** in the transport stream encoder **110** makes allowance in its packing for the transport stream headers and extra time stamps being included in the transport stream before its being parsed into syncblocks in the data-frame assembler **110**. The compressed-video-signal packer **139** used in the data-frame assembler **106** for recording compressed video signal that is not converted to transport stream format performs its packing without such allowance being made nor having to be made. When a marker first occurs after a prescribed interval following syncblock header, each of the compressed-video-signal packers **138** and **139** discontinues packing code from the buffer memory **1371** and begins to pack code from the buffer memory **1372** instead. Packing code from the buffer memory **1372** then continues until the end of the syncblock is reached. The quantizing table selection circuitry **134** receives a first rate control signal from the buffer memory **1371** and a second rate control signal from the buffer memory **1372** for controlling the selection of quantization tables, so that quantization tables can be chosen to keep the amount of information each buffer memory stores within prescribed limits.

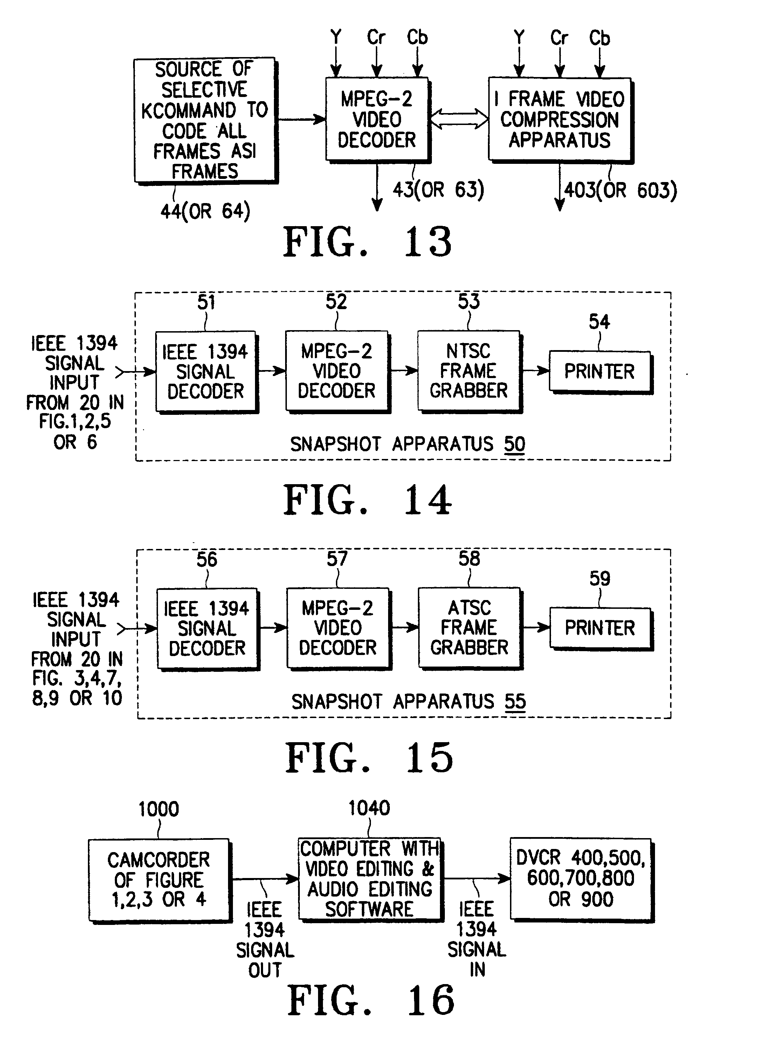

FIGURE 13 indicates how in a modification of the DVCR **400** of FIGURE 5 or of the DVCR **500** of FIGURE 6 an MPEG-2 decoder **43** is conditioned for functionally replacing the video compression apparatus **403** for generating consecutive **I** frames only, by providing a source **44** of the selective command for the MPEG-2 decoder **43** to encode all sequential frames as **I** frames rather than just anchor frames. FIGURE 13 also indicates, in parentheses, how in a modification of the digital tape recorder and player of FIGURE 7, 8, 9 or 10 an MPEG-2 decoder **63** is conditioned for functionally replacing the video compression apparatus **603** for generating consecutive **I** frames only, by providing a source **64** of the selective command for the MPEG-2 decoder **63** to encode all sequential frames as **I** frames rather than just the anchor frames.

FIGURE 14 shows snapshot apparatus **50** suited for use with the camcorder of FIGURE 1 or 2, or with the digital tape recorder and player of FIGURE 5 or 6. The snapshot apparatus **50** includes a IEEE 1394 signal decoder **51** for the IEEE 1394 Standard signal supplied from the IEEE 1394 signal encoder **20** or **420**, an MPEG-2 decoder **52** for decoding video packets supplied from the decoder **51**, a frame grabber **53** for NTSC video frames, and a printer **54** for producing a hard copy reproduction of the grabbed NTSC video frame. The frame grabber **53** is a memory for snatching from a continuous stream of digital video signal samples those data descriptive of a single selected frame of video and, by way of example, employs a small magnetic disk memory. A modified MPEG-2 decoder only for I frames can be used in the snapshot apparatus **50**.

FIGURE 15 shows snapshot apparatus **55** suited for use with the camcorder of FIGURE 3 or 4, or with the digital tape recorder and player of FIGURE 7 or 8. The snapshot apparatus **55** includes an IEEE 1394 signal decoder **56** for the IEEE 1394 Standard signal supplied from the IEEE 1394 signal encoder **20** or **420**, an MPEG-2 decoder **57** for decoding video packets supplied from the decoder **56**, a frame grabber **58** for ATSC video frames, and a printer **59** for producing a hard copy reproduction of the grabbed ATSC video frame. A modified MPEG-2 decoder only for **I** frames can be used in the snapshot apparatus **55**.

FIGURE 16 shows a system including a digital camcorder **1000**, a computer **1040** with video and audio editing software, and one of the DVCRs **400, 500, 600, 700, 800** and **900.** If the DVCR **400** or **500** is used, the digital camcorder **1000** can be of the sort shown in FIGURE 1 or 2. If the DVCR **600**, **700**, **800** and **900** is used, the digital camcorder 1000 can be of the sort shown in FIGURE 3 or 4. The IEEE 1394 Standard output signal of the digital camcorder **1000** is supplied to the computer **1040** which should have storage capability for appreciably long sequences of frames.

Generally video editing is done first, after video and audio data are separated to separate memories. After video editing is completed, audio editing can then be done. This avoids editing interrupting the audio signal at inopportune times - e. g., in the mid-sentence of an interview. During the process of video editing, the software in the computer **1040** stores the time stamp information of deleted video material, so the editor will know which audio packets need to be evaluated during the deferred audio editing procedures.

The computer **1040** can be supplied additional material to be used in editing by means additional to the camcorder **1000**. For example, arrangments can be made to allow the computer **1040** to additively mix background music or voice-over with audio decoded froma compressed audio signal recorded at the time digital video was being produced by a video camera. Keyboard input to the computer **1040** can be used to help implement the insertion of titling or captions into the compressed video. Computer graphics packages can be used to improve titling. Arrangements can be made to decode compressed video, to perform special-effects operations on the decoded video in the computer **1040**, and to compress the processed video. These arrangements allow video editing other than jump cuts-e. g., fades through black, wipes and iris effects. The finally edited information is then placed into IEEE 1394 Standard signal format by the computer **1040** to be supplied to the IEEE **1394** signal input of the DVCR **400**, **500**, **600**, **700**, **800** or **900** which DVCR records the finally edited information on a video diskette.

One skilled in the art will be enabled by the foregoing description and the accompanying drawing readily to construct other embodiments of the invention that are equivalent to those specifically described; and the claims which follow should be construed to include obvious design variations within their scope. For example, error-correction coding of components of the transport stream can be performed at least in part before assembling the transport stream from its component parts. By way of further example, error-correction decoding of components of the transport stream can be performed at least in part after disassembling the transport stream into its component parts. As still further example, other means for recording on an optical medium such as a compact disk recorder and player may replace the digital video disk recorder and player. In the claims which follow, the term "MPEG-2 decoder" is to be construed to apply to a complete MPEG-2 decoder, capable of decoding **P** and **B** frames as well as **I** frames, and also to apply to modifications of such decoder that decode only **I** frames.

## Claims

1. A method for transmitting compressed video information, comprising the steps of:
generating a succession of line-interlaced raster-scanned frames of video information as luminance signal and first and second color-difference signals in a 4:2:0 sampling format;
intraframe compression encoding each line-interlaced raster-scanned consecutive frame of video information, in accordance with the MPEG-2 standard that conventionally is used for intraframe compression of only selected ones of said consecutive frames of video information, thereby to generate components of a transport stream.

2. The method of claim 1 including the further step of:
in accordance with the MPEG-2 standard, inserting into said transport stream codes identifying each said consecutive frame of video information as being intraframe compression encoded.

3. The method of claim 1 including the further step of:
recording said transport stream on a magnetic storage medium.

4. The method of claim 1 including the further steps of:
extracting trickplay information from each frame of video information for insertion into said transport stream, and
recording on a magnetic storage medium said transport stream with said trickplay information inserted therein.

5. The method of claim 1 including the further steps of:
arranging zero-frequency and low-frequency DCT information at the beginnings of sync blocks in said said transport stream, and
recording on a magnetic storage medium said transport stream as so arranged.

6. The method of claim 1 including the further step of:
recording said transport stream on an optical disk. medium.

7. The method of claim 1 including the further step of:
transmitting said transport stream over a microwave link.

8. The method of claim 1 including the further step of:
transmitting said transport stream from one computer to another via a packet communications link.

9. The method of claim 1 including the further step of:
editing said transport stream using a computer.

10. A method for transmitting compressed video information, comprising the steps of:
generating a succession of progressively scanned frames of video information as luminance signal and first and second color-difference signals in a 4:2:0 sampling format;
intraframe compression encoding each progressively scanned consecutive frame of video information, in accordance with the MPEG-2 standard that conventionally is used for intraframe compression of only selected ones of said consecutive frames of video information, thereby to generate components of a transport stream.

11. The method of claim 10 including the further step of:
in accordance with the MPEG-2 standard, inserting into said transport stream codes identifying each said consecutive frame of video information as being intraframe compression encoded.

12. The method of claim 10 including the further step of:
recording said transport stream on a magnetic storage medium.

13. The method of claim 10 including the further steps of:
extracting trickplay information from each frame of video information for insertion into said transport stream
recording on a magnetic storage medium said transport stream with said trickplay information inserted therein.

14. The method of claim 10 including the further steps of:
arranging zero-frequency and low-frequency DCT information at the beginnings of sync blocks in said said transport stream, and
recording on a magnetic storage medium said transport stream as so arranged.

15. The method of claim 10 including the further step of:
recording said transport stream on an optical disk. medium.

16. The method of claim 10 including the further step of:
transmitting said transport stream over a microwave link.

17. The method of claim 10 including the further step of:
transmitting said transport stream from one computer to another via a packet communications link.

18. The method of claim 10 including the further step of:
editing said transport stream using a computer.

19. A video compression system comprising:
a source of luminance signal and first and second color difference signals descriptive of successive fields of video information;
an input processor for converting said luminance signal and said first and second color difference signals into frames of video information having a 4:2:0 sampling format; and
video compression apparatus for performing intraframe compression encoding on each consecutive frame of the video information having a 4:2:0 sampling format, said intraframe compression encoding being done using discrete cosine transformation of blocks of pixels in each frame of video information and subsequent compression encoding of each consecutive transformed frame in accordance with the MPEG-2 standard for intraframe compression encoding of selected frames of video, said intraframe compression encoding including the identification of each consecutive frame as being intraframe compression encoded, the results of the intraframe encoding being supplied by said video compression apparatus as a stream of compressed video data.

20. The video compression system of claim 19 in combination with:
an MPEG-2 decoder for decoding said stream of compressed video data.

21. The video compression system of claim 19 in combination with:.
an MPEG-2 decoder for decoding said stream of compressed video data; and
television display apparatus for displaying television images responsive to decoding results from said MPEG-2 decoder.

22. The combination of claim 21, wherein said source of luminance signal and color difference signals descriptive of successive fields of video information is a video camera, and wherein said television display apparatus is operable as a camera viewfinder.

23. The combination of claim 22 further comprising:
decoding results memory for temporarily storing said decoding results from said MPEG-2 decoder; and
a printer for printing a selected frame read to said printer from said decoding results memory.

24. The combination of claim 21 further comprising:
decoding results memory for temporarily storing said decoding results from said MPEG-2 decoder; and
a printer for printing a selected frame read to said printer from said decoding results memory.

25. The video compression system of claim 19 included in a video recording system for recording said compressed video information in variations of the magnetization of a magnetic tape recording medium, said video recording system further comprising:
electromagnetic tape recording apparatus having a tape transport for said magnetic tape recording medium, having heads mounted on a head drum for helically scanning said magnetic tape recording medium as transported thereby, and having a rotary transformer for transformer coupling signals to and from said heads;
a modulator responsive to a modulating signal for generating modulation results without substantial direct component for transformer coupling via said rotary transformer to said heads during times of recording said compressed video information;
a transport stream assembler for assembling a transport stream of data by time-division-multiplexing said stream of compressed video data with other data; and
an error-correction encoder for forward error correction encoding said transport stream of data to generate error-correction-coding results applied to said modulator as said modulating signal.

26. The video recording system set forth in claim 25, wherein said modulator is a 24/25 modulator for generating I-NRZI modulation.

27. The video recording system set forth in claim 25, wherein said error-correction encoder performs Reed-Solomon forward error correction encoding on said transport stream to generate said error-correction-coding results.

28. The video recording system set forth in claim 25 included in a system for recording and reproducing video information, which system for recording and reproducing video information further comprises:
a demodulator for demodulating reproduced modulation results coupled thereto from said heads via said rotary transformer during times of playing back said compressed video information as previously recorded on said magnetic tape recording medium, said demodulator supplying during those times demodulation results that reproduce said modulating signal;
an error-correction decoder for error correction decoding said demodulation results to reproduce said transport stream of data;
a transport stream disassembler for disassembling said transport stream of data to reproduce said stream of compressed video data by time-division de-multiplexing said compressed video data from said other data;
an MPEG-2 decoder for decoding the reproduced stream of compressed video data; and
television display apparatus for displaying television images responsive to decoding results from said MPEG-2 decoder.

29. The video recording system set forth in claim 28, wherein said modulator is a 24/25 modulator for generating I-NRZI modulation.

30. The video recording system set forth in claim 29, wherein said error-correction encoder performs Reed-Solomon forward error correction encoding of said transport stream of data to generate said error-correction-coding results, and wherein said
error-correction decoder decodes the reproduced Reed-Solomon error-correction-coding results in said demodulation results to reproduce said transport stream of data.

31. The video recording system set forth in claim 25 further comprising:
a demodulator for demodulating reproduced modulation results coupled thereto from said heads via said rotary transformer during times of playing back said compressed video information as previously recorded on said magnetic tape medium, said demodulator supplying during those times demodulation results that reproduce said modulating signal;
an error-correction decoder for error correction decoding said demodulation results to reproduce said transport stream of data;
a transport stream disassembler for disassembling said transport stream of data to reproduce said stream of compressed video data by time-division de-multiplexing said compressed video data from said other data;
an MPEG-2 decoder for decoding the reproduced stream of compressed video data;
television display apparatus for displaying television images responsive to decoding results from said MPEG-2 decoder;
decoding results memory for temporarily storing said decoding results from said MPEG-2 decoder; and
a printer for printing a selected frame read to said printer from said decoding results memory.

32. The video recording system set forth in claim 31, wherein said modulator is a 24/25 modulator for generating I-NRZI modulation.

33. The video recording system set forth in claim 32, wherein said error-correction encoder performs Reed-Solomon forward error correction encoding of said transport stream of data to generate said error-correction-coding results, and wherein said
error-correction decoder decodes the reproduced Reed-Solomon
error-correction-coding results in said demodulation results to reproduce said transport stream of data.

34. The video compression system of claim 19, further including:
a microwave transmitter for transmitting said results of said intraframe compression.

35. The video compression system of claim 34 in combination with:
a microwave receiver for receiving said results, of said intraframe compression transmitted by said microwave transmitter, and
a digital tape recorder for recording said results of said intraframe compression as received by said microwave receiver.

36. The video compression system of claim 19, in combination with:
a computer for editing the results of said intraframe compression; and
apparatus for storing the edited results of said intraframe compression within a storage medium.

## Patentansprüche

1. Verfahren zum Übertragen komprimierter Videoinformationen, das die folgenden Schritte umfasst:
Erzeugen einer Folge rasterabgetasteter Zeilensprungverfahren-Vollbilder von Videoinformationen als ein Leuchtdichtesignal sowie als ein erstes und ein zweites Farbdifferenzsignal in einem Abtastformat von 4:2:0;
Intra-Bild-Komprimierungscodierung jedes aufeinander folgenden rasterabgetasteten Zeilensprungverfahren-Vollbilds von Videoinformationen in Übereinstimmung mit dem MPEG-2-Standard, der herkömmlich zur Intra-Bild-Komprimierung lediglich ausgewählter der aufeinander folgenden Vollbilder von Videoinformationen verwendet wird, um dadurch Komponenten eines Transportstroms zu erzeugen.

2. Verfahren nach Anspruch 1, das den folgenden weiteren Schritt enthält:
Einfügen von Codes, die jedes aufeinander folgende Vollbild von Videoinformationen als Intra-Bild-komprimierungscodiert identifizieren, in den Transportstrom in Übereinstimmung mit dem MPEG-2-Standard.

3. Verfahren nach Anspruch 1, das den folgenden weiteren Schritt enthält:
Aufzeichnen des Transportstroms auf einem Magnetspeichermedium.

4. Verfahren nach Anspruch 1, das die folgenden weiteren Schritte enthält:
Entnehmen von Trickplay-Informationen aus jedem Vollbild von Videoinformationen zum Einfügen in den Transportstrom, und
Aufzeichnen des Transportstroms mit den darin eingefügten Trickplay-Informationen auf einem Magnetspeichermedium.

5. Verfahren nach Anspruch 1, das die folgenden weiteren Schritte enthält:
Anordnen von Nullfrequenz- und Niederfrequenz-DCT-Informationen an den Anfängen der Synchronisationsblöcke in dem Transportstrom, und
Aufzeichnen des auf diese Weise angeordneten Transportstroms auf einem Magnetspeichermedium.

6. Verfahren nach Anspruch 1, das den folgenden weiteren Schritt enthält:
Aufzeichnen des Transportstroms auf einem optischen Plattenmedium.

7. Verfahren nach Anspruch 1, das den folgenden weiteren Schritt enthält:
Übertragen des Transportstroms über eine Mikrowellenverbindung.

8. Verfahren nach Anspruch 1, das den folgenden weiteren Schritt enthält:
Übertragen des Transportstroms über eine Paketnachrichtenverbindung von einem Computer zu einem anderen.

9. Verfahren nach Anspruch 1, das den folgenden weiteren Schritt enthält:
Editieren des Transportstroms unter Verwendung eines Computers.

10. Verfahren zum Übertragen komprimierter Videoinformationen, das die folgenden Schritte umfasst:
Erzeugen einer Folge progressiv abgetasteter Vollbilder von Videoinformationen als ein Leuchtdichtesignal sowie als ein erstes und ein zweites Farbdifferenzsignal in einem Abtastformat von 4:2:0;
Intra-Bild-Komprimierungscodierung jedes progressiv abgetasteten aufeinander folgenden Vollbilds von Videoinformationen in Übereinstimmung mit dem MPEG-2-Standard, der herkömmlich für die Intra-Bild-Komprimierung lediglich ausgewählter der aufeinander folgenden Vollbilder von Videoinformationen verwendet wird, um dadurch Komponenten eines Transportstroms zu erzeugen.

11. Verfahren nach Anspruch 10, das den folgenden weiteren Schritt enthält:
Einfügen von Codes, die jedes aufeinander folgende Vollbild von Videoinformationen als Intra-Bild-komprimierungscodiert identifizieren, in den Transportstrom in Übereinstimmung mit dem MPEG-2-Standard.

12. Verfahren nach Anspruch 10, das den folgenden weiteren Schritt enthält:
Aufzeichnen des Transportstroms auf einem Magnetspeichermedium.

13. Verfahren nach Anspruch 10, das die folgenden weiteren Schritte enthält:
Entnehmen von Trickplay-Informationen aus jedem Vollbild von Videoinformationen zum Einfügen in den Transportstrom,
Aufzeichnen des Transportstroms mit den darin eingefügten Trickplay-Informationen auf einem Magnetspeichermedium.

14. Verfahren nach Anspruch 10, das die folgenden weiteren Schritte enthält:
Anordnen von Nullfrequenz- und Niederfrequenz-DCT-Informationen an den Anfängen der Synchronisationsblöcke in dem Transportstrom, und
Aufzeichnen des auf diese Weise angeordneten Transportstroms auf einem Magnetspeichermedium.

15. Verfahren nach Anspruch 10, das den folgenden weiteren Schritt enthält:
Aufzeichnen des Transportstroms auf einem optischen Plattenmedium.

16. Verfahren nach Anspruch 10, das den folgenden weiteren Schritt enthält:
Übertragen des Transportstroms über eine Mikrowellenverbindung.

17. Verfahren nach Anspruch 10, das den folgenden weiteren Schritt enthält:
Übertragen des Transportstroms über eine Paketnachrichtenverbindung von einem Computer zu einem anderen.

18. Verfahren nach Anspruch 10, das den folgenden weiteren Schritt enthält:
Editieren des Transportstroms unter Verwendung eines Computers.

19. Videokomprimierungssystem, das umfasst:
eine Quelle eines Leuchtdichtesignals sowie eines ersten und eines zweiten Farbdifferenzsignals, die aufeinander folgende Vollbilder von Videoinformationen beschreiben;
einen Eingangsprozessor zum Umsetzen des Leuchtdichtesignals sowie des ersten und des zweiten Farbdifferenzsignals in Vollbilder von Videoinformationen mit einem Abtastformat von 4:2:0; und
eine Videokomprimierungsvorrichtung zum Ausführen einer Intra-Bild-Komprimierungscodierung an jedem aufeinander folgenden Vollbild der Videoinformationen mit einem Abtastformat von 4:2:0, wobei die Intra-Bild-Komprimierungscodierung unter Verwendung der diskreten Kosinustransformation von Blöcken von Pixeln in jedem Vollbild von Videoinformationen erfolgt und die nachfolgende Komprimierungscodierung jedes aufeinander folgenden transformierten Vollbilds in Übereinstimmung mit dem MPEG-2-Standard für die Intra-Bild-Komprimierungscodierung ausgewählter Videovollbilder erfolgt, wobei die Intra-Bild-Komprimierungscodierung das Identifizieren jedes aufeinander folgenden Vollbilds als Intra-Bild-komprimierungscodiert enthält, wobei die Ergebnisse der Intra-Bild-Codierung von der Videokomprimierungsvorrichtung als Strom komprimierter Videodaten zugeführt werden.

20. Videokomprimierungssystem nach Anspruch 19, zusammen mit:
einem MPEG-2-Decodierer zum Decodieren des Stroms komprimierter Videodaten.

21. Videokomprimierungssystem nach Anspruch 19, zusammen mit:
einem MPEG-2-Decodierer zum Decodieren des Stroms komprimierter Videodaten; und
einer Fernsehanzeigevorrichtung zum Anzeigen von Fernsehbildern in Reaktion auf die Decodierungsergebnisse von dem MPEG-2-Decodierer.

22. Kombination nach Anspruch 21, bei der die Quelle des Leuchtdichtesignals und der Farbdifferenzsignale, die die aufeinander folgenden Vollbilder von Videoinformationen beschreiben, eine Videokamera ist und bei der die Fernsehanzeigevorrichtung als ein Kamerasucher betreibbar ist.

23. Kombination nach Anspruch 22, die ferner umfasst:
einen Decodierungsergebnisspeicher zum vorübergehenden Speichern der Decodierungsergebnisse von dem MPEG-2-Decodierer; und
einen Drucker zum Drucken eines ausgewählten Vollbilds, das aus dem Decodierungsergebnisspeicher in den Drucker gelesen worden ist.

24. Kombination nach Anspruch 21, die ferner umfasst:
einen Decodierungsergebnisspeicher zum vorübergehenden Speichern der Decodierungsergebnisse von dem MPEG-2-Decodierer; und
einen Drucker zum Drucken eines ausgewählten Vollbilds, das aus dem Decodierungsergebnisspeicher in den Drucker gelesen worden ist.

25. Videokomprimierungssystem nach Anspruch 19, das in einem Videoaufzeichnungssystem enthalten ist, um die komprimierten Videoinformationen in Änderungen der Magnetisierung eines Magnetband-Aufzeichnungsmediums aufzuzeichnen, wobei das Videoaufzeichnungssystem ferner umfasst:
eine elektromagnetische Bandaufzeichnungsvorrichtung mit einem Bandtransport für das Magnetband-Aufzeichnungsmedium, mit Köpfen, die an einer Kopftrommel angebracht sind, um das Magnetband-Aufzeichnungsmedium spiralförmig abzutasten, während es dabei transportiert wird, und mit einem rotierenden Übertrager, um die Signale zu und von den Köpfen zu koppeln;
einen Modulator, um in Reaktion auf ein Modulationssignal Modulationsergebnisse ohne wesentliche Gleichkomponente zu erzeugen, damit sie der Übertrager während Aufzeichnungszeiten der komprimierten Videoinformationen über den rotierenden Übertrager zu den Köpfen koppelt;
eine Transportstrom-Zusammensetzungseinrichtung, um durch Zeitmultiplexierung des Stroms komprimierter Videodaten mit anderen Daten einen Transportstrom von Daten zusammenzusetzen; und
einen Fehlerkorrekturcodierer, um eine Vorwärtsfehlerkorrekturcodierung des Transportstroms von Daten auszuführen, um Fehlerkorrekturcodierungsergebnisse zu erzeugen, die als das Modulationssignal an den Modulator angelegt werden.

26. Videoaufzeichnungssystem nach Anspruch 25, bei dem der Modulator ein 24/25-Modulator zum Erzeugen einer I-NRZI-Modulation ist.

27. Videoaufzeichnungssystem nach Anspruch 25, bei dem der Fehlerkorrekturcodierer an dem Transportstrom eine Reed-Solomon-Vorwärtsfehlerkorrekturcodierung ausführt, um die Fehlerkorrekturcodierungsergebnisse zu erzeugen.

28. Videoaufzeichnungssystem nach Anspruch 25, das in einem System zum Aufzeichnen und Wiedergeben von Videoinformationen enthalten ist, das ferner umfasst:
einen Demodulator zum Demodulieren wiedergegebener Modulationsergebnisse, die während Abspielzeiten der komprimierten Videoinformationen, wie sie zuvor auf dem Magnetband-Aufzeichnungsmedium aufgezeichnet worden sind, über den rotierenden Übertrager von den Köpfen mit ihm gekoppelt sind, wobei der Demodulator während dieser Zeiten Demodulationsergebnisse liefert, die das Modulationssignal wiedergeben;
einen Fehlerkorrekturdecodierer zur Fehlerkorrekturdecodierung der Demodulationsergebnisse zum Wiedergeben des Transportstroms von Daten;
eine Transportstrom-Zerlegungseinrichtung zum Zerlegen des Transportstroms von Daten durch Zeitdemultiplexierung der komprimierten Videodaten von den anderen Daten zum Wiedergeben des Stroms komprimierter Videodaten;
einen MPEG-2-Decodierer zum Decodieren des wiedergegebenen Stroms komprimierter Videodaten; und
eine Fernsehanzeigevorrichtung zum Anzeigen von Fernsehbildern in Reaktion auf die Decodierungsergebnisse von dem MPEG-2-Decodierer.

29. Videoaufzeichnungssystem nach Anspruch 28, bei dem der Modulator ein 24/25-Modulator zum Erzeugen einer I-NRZI-Modulation ist.

30. Videoaufzeichnungssystem nach Anspruch 29, bei dem der Fehlerkorrekturcodierer eine Reed-Solomon-Vorwärtsfehlerkorrekturcodierung des Transportstroms von Daten ausführt, um die Fehlerkorrekturcodierungsergebnisse zu erzeugen, und bei dem der
Fehlerkorrekturdecodierer die wiedergegebenen Ergebnisse der Reed-Solomon-Fehlerkorrekturcodierung in den Demodulationsergebnissen decodiert, um den Transportstrom von Daten wiederzugeben.

31. Videoaufzeichnungssystem nach Anspruch 25, das ferner umfasst:
einen Demodulator zum Demodulieren wiedergegebener Modulationsergebnisse, die während Abspielzeiten der komprimierten Videoinformationen, wie sie zuvor auf dem Magnetbandmedium aufgezeichnet worden sind, über den rotierenden Übertrager von den Köpfen mit ihm gekoppelt sind, wobei der Demodulator während dieser Zeiten Demodulationsergebnisse liefert, die das Modulationssignal wiedergeben;
einen Fehlerkorrekturdecodierer zur Fehlerkorrekturdecodierung der Demodulationsergebnisse zum Wiedergeben des Transportstroms von Daten;
eine Transportstrom-Zerlegungseinrichtung zum Zerlegen des Transportstroms von Daten durch Zeitdemultiplexierung der komprimierten Videodaten von den anderen Daten zum Wiedergeben des Stroms komprimierter Videodaten;
einen MPEG-2-Decodierer zum Decodieren des wiedergegebenen Stroms komprimierter Videodaten; und
eine Fernsehanzeigevorrichtung zum Anzeigen von Fernsehbildern in Reaktion auf die Decodierungsergebnisse von dem MPEG-2-Decodierer;
einen Decodierungsergebnisspeicher zum vorübergehenden Speichern der Decodierungsergebnisse von dem MPEG-2-Decodierer; und
einen Drucker zum Drucken eines ausgewählten Vollbilds, das aus dem Decodierungsergebnisspeicher in den Drucker gelesen worden ist.

32. Videodecodierungssystem nach Anspruch 31, bei dem der Modulator ein 24/25-Modulator zum Erzeugen einer I-NRZI-Modulation ist.

33. Videoaufzeichnungssystem nach Anspruch 32, bei dem der Fehlerkorrekturcodierer eine Reed-Solomon-Vorwärtsfehlerkorrekturcodierung des Transportstroms von Daten ausführt, um die Fehlerkorrekturcodierungsergebnisse zu erzeugen, und bei dem der
Fehlerkorrekturdecodierer die wiedergegebenen Ergebnisse der Reed-Solomon-Fehlerkorrekturcodierung in den Demodulationsergebnissen decodiert, um den Transportstrom von Daten wiederzugeben.

34. Videokomprimierungssystem nach Anspruch 19, das ferner enthält:
einen Mikrowellensender zum Übertragen der Ergebnisse der Intra-Bild-Komprimierung.

35. Videokomprimierungssystem nach Anspruch 34, zusammen mit:
einem Mikrowellenempfänger zum Empfangen der von dem Mikrowellensender gesendeten Ergebnisse der Intra-Bild-Komprimierung; und
einem digitalen Bandaufzeichnungsgerät zum Aufzeichnen der Ergebnisse der Intra-Bild-Komprimierung so, wie sie von dem Mikrowellenempfänger empfangen werden.

36. Videokomprimierungssystem nach Anspruch 19, zusammen mit:
einem Computer zum Editieren der Ergebnisse der Intra-Bild-Komprimierung; und
einer Vorrichtung zum Speichern der editierten Ergebnisse der Intra-Bild-Komprimierung in einem Speichermedium.

## Revendications

1. Procédé pour transmettre des informations vidéo comprimées, comprenant les étapes consistant à :
produire une succession d'images à balayage tramé à lignes entrelacées d'informations vidéo comme un signal de luminance et des premier et second signaux de différence de couleur dans un format d'échantillonnage 4 : 2 : 0 ;
coder par compression intra-image chaque image consécutive à balayage tramé à lignes entrelacées d'informations vidéo, selon la norme MPEG-2 qui est utilisée de manière classique pour la compression intra-image des seules images sélectionnées desdites images consécutives d'informations vidéo, pour produire de ce fait des composantes d'un flux de transport.

2. Procédé selon la revendication 1, comprenant l'étape supplémentaire consistant à :
selon la norme MPEG-2, insérer dans lesdits codes de flux de transport identifiant chaque dite image consécutive d'informations vidéo comme étant codée par compression intra-image.

3. Procédé selon la revendication 1, comprenant l'étape supplémentaire consistant à :
enregistrer ledit flux de transport sur un support de stockage magnétique.

4. Procédé selon la revendication 1 comprenant les étapes supplémentaires consistant à :
extraire des informations "trickplay" à partir de chaque image d'informations vidéo pour insertion dans ledit flux de transport ; et
enregistrer sur un support de stockage magnétique ledit flux de transport avec lesdites informations "trickplay" insérées en son sein.

5. Procédé selon la revendication 1 comprenant les étapes supplémentaires consistant à :
agencer des informations de fréquence zéro et de basse fréquence DCT aux débuts de blocs de synchronisation dans ledit flux de transport ; et
enregistrer sur un support de stockage magnétique ledit flux de transport ainsi agencé.

6. Procédé selon la revendication 1 comprenant l'étape supplémentaire consistant à :
enregistrer ledit flux de transport sur un support formant disque optique.

7. Procédé selon la revendication 1 comprenant l'étape supplémentaire consistant à :
transmettre ledit flux de transport sur une liaison hyperfréquence.

8. Procédé selon la revendication 1 comprenant l'étape supplémentaire consistant à :
transmettre ledit flux de transport depuis un ordinateur vers un autre ordinateur via une ligne de communication par paquets.

9. Procédé selon la revendication 1 comprenant l'étape supplémentaire consistant à :
éditer ledit flux de transport en utilisant un ordinateur.

10. Procédé pour transmettre des informations vidéo comprimées, comprenant les étapes consistant à :
produire une succession d'images d'informations vidéo progressivement balayées comme un signal de luminance et des premier et second signaux de différence de couleur dans un format d'échantillonnage 4 : 2 : 0 ;
coder par compression intra-image chaque image consécutive d'informations vidéo progressivement balayée, selon la norme MPEG-2 qui est utilisée de manière classique pour la compression intra-image des seules images sélectionnées desdites images consécutives d'informations vidéo, pour produire de ce fait des composantes d'un flux de transport.

11. Procédé selon la revendication 10 comprenant l'étape supplémentaire consistant à :
selon la norme MPEG-2, insérer dans lesdits codes de flux de transport identifiant chaque dite image consécutive d'informations vidéo comme étant codée par compression intra-image.

12. Procédé selon la revendication 10 comprenant l'étape supplémentaire consistant à :
enregistrer ledit flux de transport sur un support de stockage magnétique.

13. Procédé selon la revendication 10 comprenant les étapes supplémentaires consistant à :
extraire des informations "trickplay" à partir de chaque image d'informations vidéo pour insertion dans ledit flux de transport ;
enregistrer sur un support de stockage magnétique ledit flux de transport avec lesdites informations "trickplay" insérées en son sein.

14. Procédé selon la revendication 10 comprenant les étapes supplémentaires consistant à :
agencer des informations de fréquence zéro et de basse fréquence DCT aux débuts de blocs de synchronisation dans ledit flux de transport ; et
enregistrer sur un support de stockage magnétique ledit flux de transport ainsi agencé.

15. Procédé selon la revendication 10 comprenant l'étape supplémentaire consistant à :
enregistrer ledit flux de transport sur un support formant disque optique.

16. Procédé selon la revendication 10 comprenant l'étape supplémentaire consistant à :
transmettre ledit flux de transport sur une liaison hyperfréquence.

17. Procédé selon la revendication 10 comprenant l'étape supplémentaire consistant à :
transmettre ledit flux de transport depuis un ordinateur vers un autre ordinateur via une ligne de communication par paquets.

18. Procédé selon la revendication 10 comprenant l'étape supplémentaire consistant à :
éditer ledit flux de transport en utilisant un ordinateur.

19. Système de compression vidéo comprenant :
une source de signal de luminance et des premier et second signaux de différence de couleur décrivant des champs successifs d'informations vidéo ;
un processeur d'entrée pour transformer ledit signal de luminance et lesdits premier et second signaux de différence de couleur en images d'informations vidéo ayant un format d'échantillonnage 4 : 2 : 0 ; et
un appareil de compression vidéo pour effectuer un codage par compression intra-image sur chaque image consécutive des informations vidéo ayant un format d'échantillonnage 4 : 2 : 0, ledit codage par compression intra-image étant effectué en utilisant une transformation de cosinus discrète de blocs d'éléments d'image dans chaque image d'informations vidéo et en codant ensuite par compression chaque image transformée consécutive selon la norme MPEG-2 pour le codage par compression intra-image d'images sélectionnées de vidéo, ledit codage par compression intra-image comprenant l'identification de chaque image consécutive comme étant codée par compression intra-image, les résultats du codage intra-image étant fournis par ledit appareil de compression vidéo en tant que flux de données vidéo comprimées.

20. Système de compression vidéo selon la revendication 19 en combinaison avec :
un décodeur MPEG-2 pour décoder ledit flux de données vidéo comprimées.

21. Système de compression vidéo selon la revendication 19 en combinaison avec :
un décodeur MPEG-2 pour décoder ledit flux de données vidéo comprimées ; et
un appareil d'affichage de télévision pour afficher des images de télévision en réponse aux résultats de décodage en provenance dudit décodeur MPEG-2.

22. Combinaison selon la revendication 21, dans laquelle ladite source de signal de luminance et de signaux de différence de couleur décrivant des champs successifs d'informations vidéo est un appareil de prise de vues vidéo et, dans laquelle ledit appareil d'affichage de télévision peut être mis en oeuvre comme un viseur d'appareil de prise de vues.

23. Combinaison selon la revendication 22 comprenant de plus :
une mémoire de résultats de décodage pour stocker temporairement lesdits résultats de décodage en provenance dudit décodeur MPEG-2 ; et
une imprimante pour imprimer sur ladite imprimante une image sélectionnée lue à partir de ladite mémoire de résultats de décodage.

24. Combinaison selon la revendication 21 comprenant de plus :
une mémoire de résultats de décodage pour stocker temporairement lesdits résultats de décodage en provenance dudit décodeur MPEG-2 ; et
une imprimante pour imprimer sur ladite imprimante une image sélectionnée lue à partir de ladite mémoire de résultats de décodage.

25. Système de compression vidéo selon la revendication 19 inclus dans un système d'enregistrement vidéo pour enregistrer lesdites informations vidéo comprimées en faisant varier la magnétisation d'un support d'enregistrement à bande magnétique, ledit système d'enregistrement vidéo comprenant de plus:
un appareil d'enregistrement à bande électromagnétique ayant un transport de bande pour ledit support d'enregistrement à bande magnétique, ayant des têtes montées sur un tambour de têtes pour balayer de façon hélicoïdale ledit support d'enregistrement à bande magnétique lors du transport par ce dernier, et ayant un transformateur rotatif pour transformer des signaux de couplage à destination et en provenance desdites têtes;
un modulateur sensible à un signal de modulation pour produire des résultats de modulation sans composante directe importante pour le couplage de transformateur via ledit transformateur rotatif auxdites têtes pendant les instants d'enregistrement desdites informations vidéo comprimées ;
un assembleur de flux de transport pour assembler un flux de transport de données par multiplexage par répartition dans le temps dudit flux de données vidéo comprimées avec d'autres données ; et
un codeur à correction d'erreur pour le codage direct à correction d'erreur dudit flux de transport de données pour produire des résultats de codage à correction d'erreur appliqués audit modulateur en tant que dit signal de modulation.

26. Système d'enregistrement vidéo selon la revendication 25, dans lequel ledit modulateur est un modulateur 24/25 pour produire une modulation I-NRZI.

27. Système d'enregistrement vidéo selon la revendication 25, dans lequel ledit codeur à correction d'erreur effectue un codage direct à correction d'erreur de Reed-Solomon sur ledit flux de transport pour produire lesdits résultats de codage à correction d'erreur.

28. Système d'enregistrement vidéo selon la revendication 25 inclus dans un système pour enregistrer et reproduire des informations vidéo, lequel système pour enregistrer et reproduire des informations vidéo comprend de plus :
un démodulateur pour démoduler des résultats de modulation reproduits couplés à ce dernier en provenance desdites têtes via ledit transformateur rotatif pendant des instants de lecture desdites informations vidéo comprimées telles que précédemment enregistrées sur ledit support d'enregistrement à bande magnétique, ledit démodulateur délivrant pendant ces instants des résultats de démodulation qui reproduisent ledit signal de modulation ;
un décodeur à correction d'erreur pour décoder par correction d'erreur lesdits résultats de démodulation pour reproduire ledit flux de transport de données ;
un désassembleur de flux de transport pour désassembler ledit flux de transport de données pour reproduire ledit flux de données vidéo comprimées par démultiplexage par répartition dans le temps desdites données vidéo comprimées à partir desdites autres données ;
un décodeur MPEG-2 pour décoder le flux reproduit de données vidéo comprimées ; et
un appareil d'affichage de télévision pour afficher des images de télévision en réponse aux résultats de décodage en provenance dudit décodeur MPEG-2.

29. Système d'enregistrement vidéo selon la revendication 28, dans lequel ledit modulateur est un modulateur 24/25 pour produire une modulation I-NRZI.

30. Système d'enregistrement vidéo selon la revendication 29, dans lequel ledit codeur à correction d'erreur effectue un codage direct à correction d'erreur de Reed-Solomon dudit flux de transport de données pour produire lesdits résultats de codage à correction d'erreur, et dans lequel ledit décodeur à correction d'erreur décode les résultats reproduits de codage à correction d'erreur de Reed-Solomon dans lesdits résultats de démodulation pour reproduire ledit flux de transport de données.

31. Système d'enregistrement vidéo selon la revendication 25 comprenant de plus :
un démodulateur pour démoduler des résultats de modulation reproduits couplés à ce dernier en provenance desdites têtes via ledit transformateur rotatif pendant des instants de lecture desdites informations vidéo comprimées telles que précédemment enregistrées sur ledit support à bande magnétique, ledit démodulateur délivrant pendant ces instants des résultats de démodulation qui reproduisent ledit signal de modulation ;
un décodeur à correction d'erreur pour le décodage à correction d'erreur desdits résultats de démodulation pour reproduire ledit flux de transport de données ;
un désassembleur de flux de transport pour désassembler ledit flux de transport de données pour reproduire ledit flux de données vidéo comprimées par démultiplexage par répartition dans le temps desdites données vidéo comprimées à partir desdites autres données ;
un décodeur MPEG-2 pour décoder le flux reproduit de données vidéo comprimées ;
un appareil d'affichage de télévision pour afficher des images de télévision en réponse aux résultats de décodage en provenance dudit décodeur MPEG-2 ;
une mémoire de résultats de décodage pour stocker temporairement lesdits résultats de décodage en provenance dudit décodeur MPEG-2 ; et
une imprimante pour imprimer sur ladite imprimante une image sélectionnée lue à partir de ladite mémoire de résultats de décodage.

32. Système d'enregistrement vidéo selon la revendication 31, dans lequel ledit modulateur est un modulateur 24/25 pour produire une modulation I-NRZI.

33. Système d'enregistrement vidéo selon la revendication 32, dans lequel ledit codeur à correction d'erreur effectue un codage direct à correction d'erreur de Reed-Solomon dudit flux de transport de données pour produire lesdits résultats de codage à correction d'erreur, et dans lequel ledit décodeur à correction d'erreur décode les résultats reproduits de codage à correction d'erreur de Reed-Solomon dans lesdits résultats de démodulation pour reproduire ledit flux de transport de données.

34. Système de compression vidéo selon la revendication 19, comprenant de plus :
un émetteur hyperfréquence pour transmettre lesdits résultats de ladite compression intra-image.

35. Système de compression vidéo selon la revendication 34 en combinaison avec :
un récepteur hyperfréquence pour recevoir lesdits résultats de ladite compression intra-image transmise par ledit émetteur hyperfréquence ; et
un enregistreur de bande numérique pour enregistrer lesdits résultats de ladite compression intra-image lorsqu'ils sont reçus par ledit récepteur hyperfréquence.

36. Système de compression vidéo selon la revendication 19, en combinaison avec :
un ordinateur pour éditer les résultats de ladite compression intra-image ; et
un appareil pour stocker les résultats édités de ladite compression intra-image sur un support de stockage.
